# EUROPEAN PATENT APPLICATION

(11) **EP 4 685 217 A1**
(43) Date of publication of application: **28.01.2026**
(21) Application number: 24774590.4
(22) Date of filing: 27.02.2024
(51) Int. Cl.: C10M 173/02, C08L 23/26, C08L 83/04, C10M 107/28, C10M 133/04, C10M 155/02, C10N 20/02, C10N 20/04, C10N 30/00, C10N 30/08, C10N 40/36

(54) **AQUEOUS LUBRICANT COMPOSITION**

(30) Priority: 23.03.2023 JP 2023047234
(71) Applicant: Mitsui Chemicals, Inc., Tokyo 104-0028 (JP)
(72) Inventor: YAMAMOTO, Shuhei, Sodegaura-shi, Chiba 299-0265 (JP); YOSHIDA, Yuto, Sodegaura-shi, Chiba 299-0265 (JP)
(74) Representative: Hoffmann Eitle
(86) International application number: PCT/JP2024/006984
(87) International publication number: WO 2024/195445

(57) **Abstract**

An aspect of the present invention relates to an aqueous lubricant composition. The aqueous lubricant composition includes a graft-modified ethylene/α-olefin copolymer (X) having a main chain part derived from an ethylene/α-olefin copolymer (A) in which the content ratio of ethylene units is 30 to 70 mol%, Mw determined by GPC is 1,500 to 30,000, and no Tm is observed as measured by DSC, and a graft part derived from an unsaturated monomer (B) which is at least one unsaturated carboxylic acid-based monomer selected from the group consisting of an unsaturated carboxylic acid having 3 to 10 carbon atoms and a derivative thereof; an amine compound (Y) having at least one or more hydroxyl groups in the molecule; at least one silicone oil (Z) selected from the group consisting of alkyl-modified silicone oil and alkyl aralkyl-modified silicone oil; water; and a surfactant.

## Description

### Technical Field

An aspect of the present invention relates to an aqueous lubricant composition.

### Background Art

For casting a non-ferrous metal such as aluminum, magnesium or zinc, a die-casting method is used in which a bath hot liquid (molten non-ferrous metal) is injected into a mold at a high rate and a high pressure to perform molding. The die-casting method has an advantage that a product having a complicated shape can be produced with good accuracy and good efficiency, while having a problem that a casting surface is damaged due to attachment to a mold by burning. To address this, a lubricant (mold release agent) is used to prevent attachment by burning.

As the mold release agent for die-casting, emulsified mixtures obtained by using, for example, mineral oil, plant oil, other oil/fat, and wax as main components, with the main components dispersed in water, have been often used heretofore.

For example, Patent Literature 1 discloses an emulsified mixture in which wax mainly containing polyethylene whose average molecular weight is above a certain value is used for improving the efficiency with which a mold release agent attaches to a mold.

Patent Literature 2 discloses an emulsified mixture in which wax mainly containing polypropylene containing a large amount of tertiary carbon which is likely to induce a decomposition reaction is used for suppressing attachment of oxidatively degraded materials generated by heat to the surface of a mold.

Further, Patent Literature 3 discloses an aqueous lubricant composition for plastic forming of non-ferrous metal in which aralkyl alkyl-modified silicone oil is mainly used and the composition has excellent lubricity and processability.

As a water dispersion composition with a polyolefin other than the above-described polyolefins (polyethylene, polypropylene), a water dispersion composition containing a specific ethylene/α-olefin copolymer or an acid-modified product thereof is disclosed (for example, Patent Literatures 4 to 6).

### Citation List

### Patent Literature

Patent Literature 1: JPS61-103642A
Patent Literature 2: JPH6-240286A
Patent Literature 3: JP2003-253290A
Patent Literature 4: JPH1-53727A
Patent Literature 5: JP2016-102157A
Patent Literature 6: WO2022/154126

### Summary of Invention

### Technical Problem

However, in the case of Patent Literature 1, there is a problem that oxidatively degraded materials generated by heat are deposited on the surface of a metallic mold, which causes deterioration of the appearance of a product, and reduction of dimensional accuracy. Since polyethylene wax is solid, there is the disadvantage of being poor in dispersibility in water.

In the case of Patent Literature 2, attachment of oxidatively degraded materials of the mold release agent to the surface of a metallic mold can be suppressed, but also in this case, there is room for improvement in dispersibility in water of polypropylene.

Further, in the case of Patent Literature 3, contamination of a machine and a mold by powder can be prevented by avoiding the use of, for example, graphite powder, but there is room for improvement with regard to suppression of attachment of heat-degraded materials of the mold release agent to the surface of a metallic mold.

The acid-modified products of ethylene/α-olefin copolymers described in, for example, Patent Literatures 4 to 6 tend to have good dispersibility in a dispersion medium (for example, water), but when additives such as silicone oil and a surfactant are added to the dispersion medium (for example, water) for imparting physical properties such as lubricity, processability and application properties in use of the water dispersion composition for lubricants and mold release agents, the composition has room for improvement in dispersibility of lubricating oil components such as the acid-modified product and additives in the dispersion medium and emulsion stability associated with the dispersibility.

An aspect of the present invention has been made in view of the above problems, and an object to be achieved by the present invention is to provide an aqueous lubricant composition which exhibits good dispersion of a constituent lubricating oil component in water, and can be inhibited from causing fixation of heat-degraded materials to metal.

### Solution to Problem

An example of the aspect of the present invention relates to the following [1] to [9].
[1] An aqueous lubricant composition including:
   a graft-modified ethylene/α-olefin copolymer (X) having a main chain part derived from an ethylene/α-olefin copolymer (A) that satisfies the following requirements (a-1) to (a-3), and a graft part derived from an unsaturated monomer (B) that satisfies the following requirement (b-1):
   an amine compound (Y) that satisfies the following requirement (y-2);
   at least one silicone oil (Z) selected from the group consisting of alkyl-modified silicone oil and alkyl aralkyl-modified silicone oil;
   water; and
   a surfactant:
      (a-1) a content ratio of ethylene units is 30 to 70 mol%;
      (a-2) a weight-average molecular weight (Mw) determined by gel permeation chromatography (GPC) is 1,500 to 30,000;
      (a-3) no melting point (Tm) is observed as measured in differential scanning calorimetry (DSC);
      (b-1) the unsaturated monomer (B) is at least one unsaturated carboxylic acid-based monomer selected from the group consisting of an unsaturated carboxylic acid having 3 to 10 carbon atoms, and a derivative thereof;
      (y-2) one or more hydroxyl groups are present in the molecule.
[2] The aqueous lubricant composition according to [1], wherein the ethylene/α-olefin copolymer (A) satisfies the following requirements (a-4) and (a-5):
   (a-4) a kinematic viscosity at 100°C is 10 to 5,000 mm²/s;
   (a-5) a molecular weight distribution (Mw/Mn) determined by gel permeation chromatography (GPC) is 2.5 or less.
[3] The aqueous lubricant composition according to [1] or [2], wherein the unsaturated monomer (B) is maleic anhydride.
[4] The aqueous lubricant composition according to any one of [1] to [3], wherein the graft-modified ethylene/α-olefin copolymer (X) satisfies the following requirements (x-1) to (x-5):
   (x-1) a proportion of the graft part is 0.1% by mass or more and less than 70% by mass (the total amount of the main chain part and the graft part being 100% by mass);
   (x-2) a weight-average molecular weight (Mw) determined by gel permeation chromatography (GPC) is 1,500 to 30,000;
   (x-3) no melting point (Tm) is observed as measured in differential scanning calorimetry (DSC);
   (x-4) a kinematic viscosity at 100°C is 10 to 5,000 mm²/s;
   (x-5) a molecular weight distribution (Mw/Mn) determined by gel permeation chromatography (GPC) is 2.5 or less.
[5] The aqueous lubricant composition according to any one of [1] to [4], wherein a content of the graft-modified ethylene/α-olefin copolymer (X) is 0.1 to 10% by mass relative to 100% by mass of the aqueous lubricant composition.
[6] The aqueous lubricant composition according to any one of [1] to [5], wherein the amine compound (Y) satisfies the following requirement (y-1):
   (y-1) a molecular weight is 1,000 or less.
[7] The aqueous lubricant composition according to any one of [1] to [6], wherein a content of the amine compound (Y) is 10 to 60 parts by mass relative to 100 parts by mass of the graft-modified ethylene/α-olefin copolymer (X).
[8] The aqueous lubricant composition according to any one of [1] to [7], wherein a content of the silicone oil (Z) is 10 to 50% by mass relative to 100% by mass of the aqueous lubricant composition.
[9] The aqueous lubricant composition according to any one of [1] to [8], wherein the surfactant is a nonionic surfactant.

### Advantageous Effects of Invention

The aqueous lubricant composition according to an aspect of the present invention exhibits good dispersion of a constituent lubricating oil component in water, that is, the aqueous lubricant composition is excellent in emulsifiability. Further, the aqueous lubricant composition is inhibited from causing fixation of heat-degraded materials to metal. Therefore, when the aqueous lubricant composition is used as a lubricant, the number of the operations of removing lubricant-derived heat-degraded materials on the metallic mold and the periphery of the machine can be reduced, so that reduction of the cycle time of die casting, that is, improvement of operation efficiency can be expected.

### Description of Embodiments

### [Aqueous lubricant composition]

An aqueous lubricant composition according to an aspect of the present invention (hereinafter, also referred to "the present composition") includes a graft-modified ethylene/α-olefin copolymer (X) having a main chain part derived from an ethylene/α-olefin copolymer (A) that satisfies a predetermined requirement, and a graft part derived from an unsaturated monomer (B) that satisfies a predetermined requirement, an amine compound (Y), at least one silicone oil (Z) selected from the group consisting of alkyl-modified silicone oil and alkyl aralkyl-modified silicone oil, water, and a surfactant.

### <<Graft-modified ethylene/α-olefin copolymer (X)>>

The graft-modified ethylene/α-olefin copolymer (X) which is one of the components contained in the present composition (hereinafter, also referred to as a "modified copolymer (X)") is a graft-modified copolymer having a main chain part derived from an ethylene/α-olefin copolymer (A), and a graft part derived from an unsaturated monomer (B) that satisfies a predetermined requirement.

The modified copolymer (X) preferably satisfies one or more of the following requirements (x-1) to (x-5), more preferably satisfied two or more of the requirements at the same time, still more preferably satisfied three or more of the requirements at the same time, and particularly preferably satisfied all of the requirements at the same time.
(x-1) The proportion of the graft part is 0.1% by mass or more and less than 70% by mass (the total amount of the main chain part and the graft part being 100% by mass).
(x-2) The weight-average molecular weight (Mw) determined by gel permeation chromatography (GPC) is 1,500 to 30,000.
(x-3) No melting point (Tm) is observed as measured in differential scanning calorimetry (DSC).
(x-4) The kinematic viscosity at 100°C is 10 to 5,000 mm²/s.
(x-5) a molecular weight distribution (Mw/Mn) determined by gel permeation chromatography (GPC) is 2.5 or less.

### <Requirement (x-1)>

The proportion of the graft part of the modified copolymer (X) is preferably 0.1% by mass or more and less than 70% by mass, more preferably 0.5 to 50% by mass, and still more preferably in the range of 1.0 to 30% by mass. Note that the total amount of the main chain part and the graft part is 100% by mass. The use of the modified copolymer (X) in which the proportion of the graft part is in the above-described range tends to suppress fixation of heat-degraded materials of the resulting aqueous lubricant composition to metal.

Herein, for the proportion of the graft part of the modified copolymer, for example, the oxygen content is quantified by elemental analysis, and from the value thus obtained, the proportion of a backbone component derived from the unsaturated monomer (B) used for modification can be calculated.

### <Requirement (x-2)>

The weight-average molecular weight (Mw) of the modified copolymer (X) which is determined by gel permeation chromatography (GPC) is preferably 1,500 to 30,000, more preferably 1,500 to 13,500, and still more preferably 1,500 to 11,000. The use of the modified copolymer (X) whose weight-average molecular weight is in the above-described range tends to suppress fixation of heat-degraded materials of the resulting aqueous lubricant composition to metal.

Herein, the weight-average molecular weight (Mw), the number average molecular weight (Mn) and the molecular weight distribution (Mw/Mn) of each of the modified (co)polymer and the unmodified (co)polymer can be measured specifically by methods described in Examples below.

### <Requirement (x-3)>

Preferably, no melting point (Tm) is observed in the modified copolymer (X) as measured in differential scanning calorimetry (DSC). The use of such a modified copolymer (X) whose weight-average molecular weight is in the above-described range tends to suppress fixation of heat-degraded materials of the resulting aqueous lubricant composition to metal. Herein, the phrase no melting point (Tm) is observed means that the heat of fusion (ΔH) (unit: J/g) measured by differential scanning calorimetry (DSC) is not substantially measured. The phrase heat of fusion (ΔH) is not substantially measured means that no peaks are observed in measurement with a differential scanning calorimeter (DSC) or the heat of fusion measured is 1 J/g or less.

Herein, the melting point (Tm) and the heat of fusion (ΔH) of each of the modified (co)polymer and the unmodified (co)polymer can be calculated according to JIS K 7121 from a DSC curve obtained by cooling the polymer to -100°C and then heating the polymer up to 150°C at a temperature increase rate of 10°C/min with a differential scanning calorimeter (for example, X-DSC-7000 manufactured by Seiko Instruments Inc., or DSC Pyris1 or DSC 7 manufactured by PerkinElmer).

### <Requirement (x-4)>

The kinematic viscosity at 100°C of the modified copolymer (X) which is measured by a method described in JIS K 2283 is preferably 10 to 5,000 mm²/s, more preferably 15 to 3,500 mm²/s, and still more preferably 20 to 2,500 mm²/s. The use of the modified copolymer (X) whose kinetic viscosity at 100°C is in the above-described range tends to suppress fixation of heat-degraded materials of the resulting aqueous lubricant composition to metal.

### <Requirement (x-5)>

The molecular weight distribution (Mw/Mn) of the modified copolymer (X) which is measured by gel permeation chromatography (GPC) is preferably 2.5 or less, more preferably 1.4 to 2.1, more preferably 1.5 to 2.0. The use of the modified copolymer (X) whose molecular weight distribution is in the above-described range tends to suppress fixation of heat-degraded materials of the resulting aqueous lubricant composition to metal.

### <Ethylene/α-olefin copolymer (A)>

The ethylene/α-olefin copolymer (A) forming the main chain part of the modified polymer (X) (hereinafter, also referred to as a "copolymer (A)") is a copolymer of ethylene and an α-olefin. Examples of the α-olefin that is copolymerized with ethylene include α-olefins having 3 to 20 carbon atoms. One or two or more types of the copolymer (A) may be used.

Examples of the α-olefin having 3 to 20 carbon atoms include propylene, 1-butene, 1-pentene, 1-hexene, 4-methyl-1-pentene, 1-heptene, 1-octene, 1-decene, 1-dodecene, 1-tetradecene, 1-hexadecene, and 1-eicosene. Among these, α-olefins having 3 to 8 carbon atoms such as propylene, 1-butene, 1-hexene, and 1-octene are preferable, and propylene is particularly preferable.

Each of the ethylene and the α-olefin having 3 to 20 carbon atoms, which are monomers forming the ethylene/α-olefin copolymer (A) may be solely of monomers obtained from a biomass-derived raw material, solely of monomers obtained from a fossil fuel-derived raw material, or a mixture of a monomer obtained from a biomass-derived raw material and a monomer obtained from a fossil fuel-derived raw material.

The copolymer (A) satisfies the following requirements (a-1) and (a-3).
(a-1) The content ratio of ethylene units is 30 to 70 mol%.
(a-2) The weight-average molecular weight (Mw) determined by gel permeation chromatography (GPC) is 1,500 to 30,000.
(a-3) No melting point (Tm) is observed as measured in differential scanning calorimetry (DSC).

### <Requirement (a-1)>

The content ratio of ethylene-derived structural units of the copolymer (A) (hereinafter, also referred to simply as a "content ratio of ethylene units") is 30 to 70 mol%, preferably 35 to 65 mol%, more preferably 40 to 60 mol%, and still more preferably 45 to 55 mol%. Note that the total content ratio of ethylene-derived structural units and α-olefin-derived structural units is 100 mol%.

Herein, the content ratio of structural units derived from each monomer in the (co)polymer can be measured by, for example, a ¹³C-NMR method, and determined from the obtained spectrum according to reports from G. J. Ray (Macromolecules, 10, 773 (1977)), J.C. Randall (Macro-molecules, 15, 353 (1982)), and K. Kimura et al. (Polymer, 25, 4418 (1984)). Specifically, the measurement can be performed by a method described in Examples below.

### <Requirement (a-2)>

The weight-average molecular weight (Mw) of the copolymer (A) which is determined by gel permeation chromatography (GPC) is 1,500 to 30,000, preferably 1,500 to 13,500, and more preferably 1,500 to 11,000.

### <Requirement (a-3)>

No melting point is observed in the copolymer (A) as measured by differential scanning calorimetry (DSC).

The copolymer (A) preferably further satisfies one of the following requirements (a-4) and (a-5), and more preferably both the following requirements (a-4) and (a-5).
(a-4) The kinematic viscosity at 100°C is 10 to 5,000 mm²/s.
(a-5) The molecular weight distribution (Mw/Mn) determined by gel permeation chromatography (GPC) is 2.5 or less.

### <Requirement (a-4)>

The kinematic viscosity at 100°C of the copolymer (A) which is measured by a method described in JIS K 2283 is 10 to 5,000 mm²/s, preferably 15 to 3,500 mm²/s, and more preferably 20 to 2,500 mm²/s.

### <Requirement (a-5)>

The molecular weight distribution (Mw/Mn) of the copolymer (A) which is measured by gel permeation chromatography (GPC) is not particularly limited, but is preferably 2.5 or less, more preferably 1.4 to 2.1, and more preferably 1.5 to 2.0.

### <Method for producing ethylene/α-olefin copolymer (A)>

The method for producing the copolymer (A) is not particularly limited, but includes a method using a vanadium-based catalyst composed of a vanadium compound and an organoaluminum compound, such as those described in JP H2(1990)-1163B and JP H2(1990)-7998B. Further, as a method for producing a copolymer with high polymerization activity, for example, a method using a catalytic system composed of a metallocene compounds such as zirconocene and an organoaluminum oxy compound (aluminoxane) as described in JP S61(1986)-221207A, JP H7(1995)-121969B, and JP2796376B may be employed, and this method is more preferred because the chlorine content of the resulting copolymer and the 2,1-insertion of α-olefin can be reduced.

In the method using the vanadium-based catalyst, a larger amount of chlorine compound is used as an auxiliary catalyst than in the method using the metallocene-based catalyst, and therefore, there is a high possibility that a small amount of chlorine will remain in the resulting copolymer (A). On the other hand, the method using the metallocene-based catalyst is preferable in that the deterioration of the resin composition due to chlorine can be prevented since no chlorine remains substantially. The chlorine content is preferably 100 ppm or less, more preferably 50 ppm or less, still more preferably 20 ppm or less, and particularly preferably 5 ppm or less.

The chlorine content can be quantified by various known methods. For example, there is a method in which a copolymer is placed in a sample boat and undergoes thermal decomposition in an Ar/O₂ stream at a set temperature of 900°C in a combustion furnace, by using ICS-1600 manufactured by Thermo Fisher Scientific Inc., and gas generated at this time is absorbed by an absorption solution to quantify the gas by ion chromatography, for example.

In particular, by using the following method, a copolymer (A) having a favorable performance balance in terms of, for example, molecular weight control, molecular weight distribution, and amorphous property, can be obtained.

The copolymer (A) can be produced by copolymerizing ethylene with an α-olefin having 3 to 20 carbon atoms in the presence of an olefin polymerization catalyst containing a bridged metallocene compound (P) represented by formula [I] below and at least one compound (Q) selected from the group consisting of the an organometallic compound (Q-1), an organoaluminum oxy compound (Q-2), and a compound (Q-3) that reacts with the bridged metallocene compound (P) to form an ion pair.

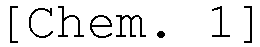

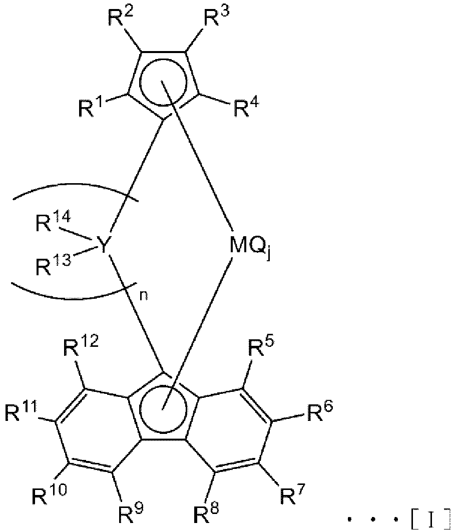

### [Bridged metallocene compound (P)]

The bridged metallocene compound (P) is represented by the above formula [I]. Y, M, R¹ to R¹⁴, Q, n and j in the formula [I] are described below.

(Y, M, R¹ to R¹⁴, Q, n and j)
Y is a Group XIV atom, is, for example, a carbon atom, a silicon atom, a germanium atom and a tin atom, and is preferably a carbon atom or a silicon atom, more preferably a carbon atom.

M is a titanium atom, a zirconium atom, or a hafnium atom, preferably a zirconium atom.

R¹ to R¹⁴ are each an atom or a substituent selected from the group consisting of a hydrogen atom, a hydrocarbon group having 1 to 20 carbon atoms, a silicon-containing group, a nitrogen-containing group, an oxygen-containing group, a halogen atom, and a halogen-containing group, and may be the same as or different from each other. The substituents R¹ to R¹⁴ that are adjacent to each other may also be bonded together to form a ring or may not be bonded to each other.

Examples of the hydrocarbon group having 1 to 20 carbon atoms include alkyl groups having 1 to 20 carbon atoms, cyclic saturated hydrocarbon groups having 3 to 20 carbon atoms, linear unsaturated hydrocarbon groups having 2 to 20 carbon atoms, cyclic unsaturated hydrocarbon groups having 3 to 20 carbon atoms, alkylene groups having 1 to 20 carbon atoms and arylene groups having 6 to 20 carbon atoms.

Examples of the alkyl groups having 1 to 20 carbon atoms include linear saturated hydrocarbon groups such as a methyl group, an ethyl group, a n-propyl group, a n-butyl group, a n-pentyl group, a n-hexyl group, a n-heptyl group, a n-octyl group, a n-nonyl group and a n-decanyl group, and branched saturated hydrocarbon groups such as an isopropyl group, an isobutyl group, a sec-butyl group, a tert-butyl group, a tert-amyl group, a neopentyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methylpropyl group, a 1-methyl-1-isopropyl-2-methylpropyl group, and a cyclopropylmethyl group. The number of carbon atoms in such an alkyl group is preferably 1 to 6.

Examples of the cyclic saturated hydrocarbon groups having 3 to 20 carbon atoms include cyclic saturated hydrocarbon groups such as a cyclopropyl group, a cyclobutyl group, a cyclopentyl group, a cyclohexyl group, a cycloheptyl group, a cyclooctyl group, a norbornenyl group, a 1-adamantyl group and a 2-adamantyl group, and cyclic saturated hydrocarbon groups in which any hydrogen atom is replaced with a hydrocarbon group having 1 to 17 carbon atoms, such as a 3-methylcyclopentyl group, a 3-methylcyclohexyl group, a 4-methylcyclohexyl group, a 4-cyclohexylcyclohexyl group and a 4-phenylcyclohexyl group. The number of carbon atoms in such a cyclic saturated hydrocarbon group is preferably 5 to 11.

Examples of the linear unsaturated hydrocarbon groups having 2 to 20 carbon atoms include alkenyl groups such as an ethenyl group (vinyl group), a 1-propenyl group, a 2-propenyl group (allyl group) and a 1-methylethenyl group (isopropenyl group), and alkynyl groups such as an ethynyl group, a 1-propynyl group and a 2-propynyl group (propargyl group). The number of carbon atoms in such a linear unsaturated hydrocarbon group is preferably 2 to 4.

Examples of the cyclic unsaturated hydrocarbon groups having 3 to 20 carbon atoms include cyclic unsaturated hydrocarbon groups such as a cyclopentadienyl group, a norbornyl group, a phenyl group, a naphthyl group, an indenyl group, an azulenyl group, a phenanthryl group and an anthracenyl group, cyclic unsaturated hydrocarbon groups in which any hydrogen atom is replaced with a hydrocarbon group having 1 to 15 carbon atoms, such as a 3-methylphenyl group (m-tolyl group), a 4-methylphenyl group (p-tolyl group), a 4-ethylphenyl group, a 4-tert-butylphenyl group, a 4-cyclohexylphenyl group, a biphenylyl group, a 3,4-dimethylphenyl group, a 3,5-dimethylphenyl group and a 2,4,6-trimethylphenyl group (mesityl group), and linear hydrocarbon groups or branched saturated hydrocarbon groups in which any hydrogen atom is replaced with a cyclic saturated hydrocarbon group or cyclic unsaturated hydrocarbon group having 3 to 19 carbon atoms, such as a benzyl group and a cumyl group. The number of carbon atoms in such a cyclic unsaturated hydrocarbon group is preferably 6 to 10.

Examples of the alkylene groups having 1 to 20 carbon atoms include a methylene group, an ethylene group, a dimethylmethylene group (isopropylidene group), an ethylmethylene group, a methylethylene group and a n-propylene group. The number of carbon atoms in such an alkylene group is preferably 1 to 6.

Examples of the arylene groups having 6 to 20 carbon atoms include an o-phenylene group, a m-phenylene group, a p-phenylene group and a 4,4'-biphenylylene group. The arylene group preferably has 6 to 12 carbon atoms.

Examples of the silicon-containing group include hydrocarbon groups having 1 to 20 carbon atoms in which any carbon atom is replaced with a silicon atom, for example, alkylsilyl groups such as a trimethylsilyl group, a triethylsilyl group, a tert-butyldimethylsilyl group and a triisopropylsilyl group, arylsilyl groups such as a dimethylphenylsilyl group, a methyldiphenylsilyl group and a tert-butyldiphenylsilyl group, and a pentamethyldisilanyl group and a trimethylsilylmethyl group. The number of carbon atoms in such an alkylsilyl group is preferably 1 to 10, and the number of carbon atoms in such an arylsilyl group is preferably 6 to 18.

Examples of the nitrogen-containing group include an amino group, and the above hydrocarbon groups having 1 to 20 carbon atoms or silicon-containing groups, in which a =CH-structural unit is replaced with a nitrogen atom, a -CH₂-structural unit is replaced with a nitrogen atom to which such a hydrocarbon group having 1 to 20 carbon atoms is bonded, or a -CH₃ structural unit is replaced with a nitrogen atom or a nitrile group to which such a hydrocarbon group having 1 to 20 carbon atoms is bonded, such as a dimethylamino group, a diethylamino group, an N-morpholinyl group, a dimethylaminomethyl group, a cyano group, a pyrrolidinyl group, a piperidinyl group and a pyridinyl group, and an N-morpholinyl group and a nitro group. The nitrogen-containing group is preferably a dimethylamino group or an N-morpholinyl group.

Examples of the oxygen-containing group include a hydroxide group, and include in the hydrocarbon groups having 1 to 20 carbon atoms, the silicon-containing groups, or the nitrogen-containing groups, as described above, a methoxy group, an ethoxy group, a tert-butoxy group, a phenoxy group, a trimethylsiloxy group, a methoxyethoxy group, a hydroxymethyl group, a methoxymethyl group, an ethoxymethyl group, tert-butoxymethyl group, a 1-hydroxyethyl group, a 1-methoxyethyl group, a 1-ethoxyethyl group, a 2-hydroxyethyl group, a 2-methoxyethyl group, an 2-ethoxyethyl group, a n-2-oxabutylene group, a n-2-oxapentylene group, a n-3 - oxapentylene group, an aldehyde group, an acetyl group, a propionyl group, a benzoyl group, a trimethylsilylcarbonyl group, a carbamoyl group, a methylaminocarbonyl group, a carboxy group, a methoxycarbonyl group, a carboxymethyl group, an ethocarboxymethyl group, a carbamoylmethyl group, a furanyl group, and a pyranyl group, for example, each of which is a group in which a -CH₂- structural unit is replaced with an oxygen atom or a carbonyl group, or a group in which a -CH₃ structural unit is replaced with an oxygen atom to which a hydrocarbon group having 1 to 20 carbon atoms is bonded. The oxygen-containing group is preferably a methoxy group.

Examples of the halogen atom include Group XVII atoms such as a fluorine atom, a chlorine atom, a bromine atom, and an iodine atom.

Examples of the halogen-containing group include the above hydrocarbon groups having 1 to 20 carbon atoms, silicon-containing groups, nitrogen-containing groups, or oxygen-containing groups, in which any hydrogen atom is substituted with a halogen atom, such as a trifluoromethyl group, a tribromomethyl group, a pentafluoroethyl group and a pentafluorophenyl group.

Q is selected as a combination of the same or different members of a halogen atom, a hydrocarbon group having 1 to 20 carbon atoms, an anion ligand, and a neutral ligand capable of coordinating to a lone electron pair.

The details of the halogen atom and the hydrocarbon group having 1 to 20 carbon atoms are as described above. When Q is the halogen atom, Q is preferably a chlorine atom. When Q is the hydrocarbon group having 1 to 20 carbon atoms, the number of carbon atoms in the hydrocarbon group is preferably 1 to 7.

Examples of the anion ligand can include alkoxy such as a methoxy group, a tert-butoxy group, and a phenoxy group, carboxylate groups such as acetate and benzoate, and sulfonate groups such as methylate and tosylate.

Examples of the neutral ligand capable of coordinating to a lone electron pair can include phosphororganic compounds such as trimethylphosphine, triethylphosphine, triphenylphosphine and diphenylmethylphosphine, and ether compounds such as tetrahydrofuran, diethyl ether, dioxane, and 1,2-dimethoxyethane.

j is an integer of 1 to 4, and is preferably 2.

n is an integer of 1 to 4, preferably 1 or 2, more preferably 1.

R¹³ and R¹⁴ are each an atom or a substituent selected from the group consisting of a hydrogen atom, a hydrocarbon group having 1 to 20 carbon atoms, an aryl group, a substituted aryl group, a silicon-containing group, a nitrogen-containing group, an oxygen-containing group, a halogen atom and a halogen-containing group, and are optionally the same as or different from each other. R¹³ and R¹⁴ are optionally bonded to each other to form a ring, or are not optionally bonded to each other.

The details of the hydrocarbon group having 1 to 20 carbon atoms, the silicon-containing group, the nitrogen-containing group, the oxygen-containing group, the halogen atom and the halogen-containing group are as described above.

Examples of the aryl group are partially overlapped with examples of the above-described cyclic unsaturated hydrocarbon groups having 3 to 20 carbon atoms, and can include aromatic compound-derived substituents such as a phenyl group, a 1-naphthyl group, a 2-naphthyl group, an anthracenyl group, a phenanthrenyl group, a tetracenyl group, a chrysenyl group, a pyrenyl group, an indenyl group, an azulenyl group, a pyrrolyl group, a pyridyl group, a furanyl group and a thiophenyl group. The aryl group is preferably a phenyl group or a 2-naphthyl group.

Examples of the aromatic compound include aromatic hydrocarbon and heterocyclic aromatic compounds, such as benzene, naphthalene, anthracene, phenanthrene, tetracene, chrysene, pyrene, indene, azulene, pyrrole, pyridine, furan and thiophene.

Examples of such a substituted aryl group are partially overlapped with examples of the above-described cyclic unsaturated hydrocarbon groups having 3 to 20 carbon atoms, and include groups, in which one or more hydrogen atoms in the aryl group are each substituted with at least one substituent selected from the group consisting of a hydrocarbon group having 1 to 20 carbon atoms, an aryl group, a silicon-containing group, a nitrogen-containing group, an oxygen-containing group, a halogen atom and a halogen-containing group, and specifically include a 3-methylphenyl group (m-tolyl group), a 4-methylphenyl group (p-tolyl group), a 3-ethylphenyl group, a 4-ethylphenyl group, a 3,4-dimethylphenyl group, a 3,5-dimethylphenyl group, a biphenylyl group, a 4-(trimethylsilyl)phenyl group, a 4-aminophenyl group, a 4-(dimethylamino)phenyl group, a 4-(diethylamino)phenyl group, a 4-morpholinylphenyl group, a 4-methoxyphenyl group, a 4-ethoxyphenyl group, a 4-phenoxyphenyl group, a 3,4-dimethoxyphenyl group, a 3,5-dimethoxyphenyl group, a 3-methyl-4-methoxyphenyl group, a 3,5-dimethyl-4-methoxyphenyl group, a 3-(trifluoromethyl)phenyl group, a 4-(trifluoromethyl)phenyl group, a 3-chlorophenyl group, a 4-chlorophenyl group, a 3-fluorophenyl group, a 4-fluorophenyl group, a 5-methylnaphthyl group and a 2-(6-methyl)pyridyl group.

Among them, a bridged metallocene compound (P) in which either or both of R¹³ and R¹⁴ are independently aryl groups is preferred, and a bridged metallocene compound (P) in which both are independently aryl groups is more preferred.

In particular, the bridged metallocene compound (P) in which both R¹³ and R¹⁴ are independently aryl groups has high polymerization activity for copolymerization of ethylene and an α-olefin, and this bridged metallocene compound (P) used selectively terminates polymerization by introduction of hydrogen at the molecular end, resulting in reduction of unsaturated bonds in the resulting copolymer (A). Therefore, a copolymer (A) with a high degree of saturation and excellent heat resistance can be obtained simply by carrying out a simpler hydrogen addition operation or without hydrogen addition, which is also excellent in terms of cost. Moreover, the copolymer (A) obtained from the compound (P) has a controlled molecular weight distribution due to its high random copolymerizability. Thus, the present composition including the graft-modified copolymer (X) having a main chain part derived from the copolymer (A) in which the copolymer (A) is graft-modified with the following unsaturated monomer (B), and a graft part derived from the unsaturated monomer (B) may have balanced and excellent antifoaming properties and bleed-out resistance at a high level.

In the bridged metallocene compound (P) represented by the above formula [I], n is preferably 1. The bridged metallocene compound (hereinafter, also referred to as "bridged metallocene compound (P-1)".) is represented by the following general formula [II].

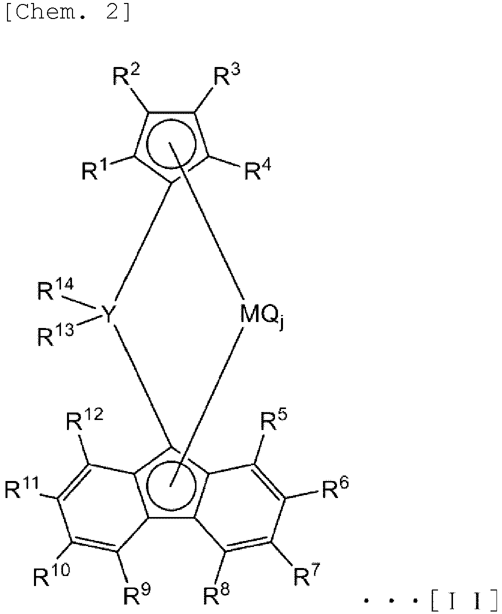

In the formula [II], the definitions of Y, M, R¹ to R¹⁴, Q and j are as described above.

Compared to the compounds in which n in formula [I] above is an integer of 2 to 4, the production process of the bridged metallocene compound (P-1) is simplified and the production cost is lowered, as well as this bridged metallocene compound (P-1) used has an advantage of the production cost of the copolymer (A) being lowered.

In the bridged metallocene compound (P) represented by the general formula [I] and the bridged metallocene compound (P-1) represented by the general formula [II], M is further preferably a zirconium atom. In a case in which ethylene and one or more monomers selected from α-olefins having 3 to 20 carbon atoms in the presence of an olefin polymerization catalyst containing the aforementioned bridged metallocene compound in which M is a zirconium atom, advantages of the polymerization activity being higher than when M is a titanium atom or hafnium atom, and the production cost of the copolymer (B) being lowered, can be obtained.

Examples of the bridged metallocene compound (P) include
[dimethylmethylene (η⁵-cyclopentadienyl)(η⁵-fluorenyl)]zirconium dichloride, [dimethylmethylene(η⁵-cyclopentadienyl) (η⁵-2,7-di-tert-butylfluorenyl)]zirconium dichloride, [dimethylmethylene (η⁵-cyclopentadienyl)(η⁵-3,6-di-tert-butylfluorenyl)]zirconium dichloride, [dimethylmethylene (η⁵-cyclopentadienyl)(η⁵-octamethyloctahydrodibenzofluorenyl)]zirconium dichloride, [dimethylmethylene (η⁵-cyclopentadienyl)(η⁵-tetramethyloctahydrodibenzofluorenyl)]zirconium dichloride,
[cyclohexylidene (η⁵-cyclopentadienyl)(η⁵-fluorenyl)]zirconium dichloride, [cyclohexylidene(η⁵-cyclopentadienyl) (η⁵-2,7-di-tert-butylfluorenyl)]zirconium dichloride, [cyclohexylidene (η⁵-cyclopentadienyl)(η⁵-3,6-di-tert-butylfluorenyl)]zirconium dichloride, [cyclohexylidene (η⁵-cyclopentadienyl)(η⁵-octamethyloctahydrodibenzofluorenyl)]zirconium dichloride, [cyclohexylidene (η⁵-cyclopentadienyl)(η⁵-tetramethyloctahydrodibenzofluorenyl)]zirconium dichloride,
[diphenylmethylene (η⁵-cyclopentadienyl)(η⁵-fluorenyl)]zirconium dichloride, [diphenylmethylene(η⁵-cyclopentadienyl) (η⁵-2,7-di-tert-butylfluorenyl)]zirconium dichloride, [diphenylmethylene (η⁵-2-methyl-4-tert-butylcyclopentadienyl) (η⁵-2,7-di-tert-butylfluorenyl)]zirconium dichloride, [diphenylmethylene(η⁵-cyclopentadienyl) (η⁵-3,6-di-tert-butylfluorenyl)]zirconium dichloride, [diphenylmethylene (η⁵-cyclopentadienyl)(η⁵-octamethyloctahydrodibenzofluorenyl)]zirconium dichloride, [diphenylmethylene{η⁵-(2-methyl-4-i-propylcyclopentadienyl)}(η⁵-octamethyloctahydrodibenzofluorenyl)]zirconium dichloride, [diphenylmethylene (η⁵-cyclopentadienyl)(η⁵-tetramethyloctahydrodibenzofluorenyl)]zirconium dichloride,
[methylphenylmethylene (η⁵-cyclopentadienyl)(η⁵-fluorenyl)]zirconium dichloride, [methylphenylmethylene(η⁵-cyclopentadienyl) (η⁵-2,7-di-tert-butylfluorenyl)]zirconium dichloride, [methylphenylmethylene (η⁵-cyclopentadienyl)(η⁵-3,6-di-tert-butylfluorenyl)]zirconium dichloride, [methylphenylmethylene (η⁵-cyclopentadienyl)(η⁵-octamethyloctahydrodibenzofluorenyl)]zirconium dichloride, [methylphenylmethylene (η⁵-cyclopentadienyl)(η⁵-tetramethyloctahydrodibenzofluorenyl)]zirconium dichloride,
[methyl (3-methylphenyl)methylene(η⁵-cyclopentadienyl)(η⁵-fluorenyl)]zirconium dichloride, [methyl(3-methylphenyl)methylene(η⁵-cyclopentadienyl)(η⁵-2,7-di-tert-butylfluorenyl)]zirconium dichloride, [methyl(3-methylphenyl)methylene(η⁵-cyclopentadienyl)(η⁵-3,6-di-tert-butylfluorenyl)]zirconium dichloride, [methyl(3-methylphenyl)methylene(η⁵-cyclopentadienyl)(η⁵-octamethyloctahydrodibenzofluorenyl)]zirconium dichloride, [methyl (3-methylphenyl)methylene(η⁵-cyclopentadienyl)(η⁵-tetramethyloctahydrodibenzofluorenyl)]zirconium dichloride,
[methyl (4-methylphenyl)methylene(η⁵-cyclopentadienyl)(η⁵-fluorenyl)]zirconium dichloride, [methyl(4-methylphenyl)methylene(η⁵-cyclopentadienyl)(η⁵-2,7-di-tert-butylfluorenyl)]zirconium dichloride, [methyl(4-methylphenyl)methylene(η⁵-cyclopentadienyl)(η⁵-3,6-di-tert-butylfluorenyl)]zirconium dichloride, [methyl(4-methylphenyl)methylene(η⁵-cyclopentadienyl)(η⁵-octamethyloctahydrodibenzofluorenyl)]zirconium dichloride, [methyl (4-methylphenyl)methylene(η⁵-cyclopentadienyl)(η⁵-tetramethyloctahydrodibenzofluorenyl)]zirconium dichloride,
[diphenylsilylene (η⁵-cyclopentadienyl)(η⁵-fluorenyl)]zirconium dichloride, [diphenylsilylene(η⁵-cyclopentadienyl) (η⁵-2,7-di-tert-butylfluorenyl)]zirconium dichloride, [diphenylsilylene (η⁵-cyclopentadienyl)(η⁵-3,6-di-tert-butylfluorenyl)]zirconium dichloride, [diphenylsilylene (η⁵-cyclopentadienyl)(η⁵-octamethyloctahydrodibenzofluorenyl)]zirconium dichloride, [diphenylsilylene (η⁵-cyclopentadienyl)(η⁵-tetramethyloctahydrodibenzofluorenyl)]zirconium dichloride,
[bis(3-methylphenyl)silylene (η⁵-cyclopentadienyl)(η⁵-fluorenyl)]zirconium dichloride, [bis(3-methylphenyl) silylene (η⁵-cyclopentadienyl)(η⁵-2,7-di-tert-butylfluorenyl)]zirconium dichloride, [bis(3-methylphenyl) silylene (η⁵-cyclopentadienyl)(η⁵-3,6-di-tert-butylfluorenyl)]zirconium dichloride, [bis(3-methylphenyl) silylene (η⁵-cyclopentadienyl)(η⁵-octamethyloctahydrodibenzofluorenyl)]zirconium dichloride, [bis(3-methylphenyl)silylene (η⁵-cyclopentadienyl)(η⁵-tetramethyloctahydrodibenzofluorenyl)]zirconium dichloride,
[dicyclohexylsilylene (η⁵-cyclopentadienyl)(η⁵-fluorenyl)]zirconium dichloride, [dicyclohexylsilylene(η⁵-cyclopentadienyl) (η⁵-2,7-di-tert-butylfluorenyl)]zirconium dichloride, [dicyclohexylsilylene (η⁵-cyclopentadienyl)(η⁵-3,6-di-tert-butylfluorenyl)]zirconium dichloride, [dicyclohexylsilylene (η⁵-cyclopentadienyl)(η⁵-octamethyloctahydrodibenzofluorenyl)]zirconium dichloride, [dicyclohexylsilylene (η⁵-cyclopentadienyl)(η⁵-tetramethyloctahydrodibenzofluorenyl)]zirconium dichloride,
[ethylene (η⁵-cyclopentadienyl)(η⁵-fluorenyl)]zirconium dichloride, [ethylene (η⁵-cyclopentadienyl)(η⁵-2,7-di-tert-butylfluorenyl)]zirconium dichloride, [ethylene(η⁵-cyclopentadienyl) (η⁵-3,6-di-tert-butylfluorenyl)]zirconium dichloride, [ethylene (η⁵-cyclopentadienyl)(η⁵-octamethyloctahydrodibenzofluorenyl)]zirconium dichloride, [ethylene (η⁵-cyclopentadienyl)(η⁵-tetramethyloctahydrodibenzofluorenyl)]zirconium dichloride,
ethylene [η⁵-(3-tert-butyl-5-methylcyclopentadienyl)](η⁵-fluorenyl) zirconium dichloride, ethylene[η⁵-(3-tert-butyl-5-methylcyclopentadienyl)][η⁵-(3,6-di-tert-butylfluorenyl)]zirconium dichloride, ethylene[η⁵-(3-tert-butyl-5-methylcyclopentadienyl)][η⁵-(2,7-di-tert-butylfluorenyl)]zirconium dichloride, ethylene[η⁵-(3-tert-butyl-5-methylcyclopentadienyl)](octamethyloctahydrodibenzofluorenyl) zirconium dichloride, ethylene[η⁵-(3-tert-butyl-5-methylcyclopentadienyl)](benzofluorenyl)zirconium dichloride, ethylene[η⁵-(3-tert-butyl-5-methylcyclopentadienyl)](dibenzofluorenyl)zirconium dichloride, ethylene[η⁵-(3-tert-butyl-5-methylcyclopentadienyl)](octahydrodibenzofluorenyl)zirconium dichloride, ethylene[η⁵-(3-tert-butyl-5-methylcyclopentadienyl)][η⁵-(2,7-diphenyl-3,6-di-tert-butylfluorenyl)]zirconium dichloride, ethylene[η⁵-(3-tert-butyl-5-methylcyclopentadienyl)][η⁵-(2,7-dimethyl-3,6-di-tert-butylfluorenyl)]zirconium dichloride,
ethylene [η⁵-(3-tert-butylcyclopentadienyl)](η⁵-fluorenyl) zirconium dichloride, ethylene[η⁵-(3-tert-butylcyclopentadienyl)][η⁵-(3,6-di-tert-butylfluorenyl)]zirconium dichloride, ethylene[η⁵-(3-tert-butylcyclopentadienyl)][η⁵-(2,7-di-tert-butylfluorenyl)]zirconium dichloride, ethylene[η⁵-(3-tert-butylcyclopentadienyl)](octamethyloctahydrodibenzofluorenyl)z irconium dichloride, ethylene[η⁵-(3-tert-butylcyclopentadienyl)](benzofluorenyl)zirconium dichloride, ethylene[η⁵-(3-tert-butylcyclopentadienyl)](dibenzofluorenyl)zirconium dichloride, ethylene[η⁵-(3-tert-butylcyclopentadienyl)](octahydrodibenzofluorenyl)zirconium dichloride, ethylene[η⁵-(3-tert-butylcyclopentadienyl)][η⁵-(2,7-diphenyl-3,6-di-tert-butylfluorenyl)]zirconium dichloride, ethylene[η⁵-(3-tert-butylcyclopentadienyl)][η⁵-(2,7-dimethyl-3,6-di-tert-butylfluorenyl)]zirconium dichloride,
ethylene [η⁵-(3-n-butylcyclopentadienyl)](η⁵-fluorenyl) zirconium dichloride, ethylene[η⁵-(3-n-butylcyclopentadienyl)][η⁵-(3,6-di-tert-butylfluorenyl)]zirconium dichloride, ethylene[η⁵-(3-n-butylcyclopentadienyl)][η⁵-(2,7-di-tert-butylfluorenyl)]zirconium dichloride, ethylene[η⁵-(3-n-butylcyclopentadienyl)](octamethyloctahydrodibenzofluorenyl)z irconium dichloride, ethylene[η⁵-(3-n-butylcyclopentadienyl)](benzofluorenyl)zirconiumdichloride, ethylene[η⁵-(3-n-butylcyclopentadienyl)](dibenzofluorenyl)zirconium dichloride, ethylene[η⁵-(3-n-butylcyclopentadienyl)](octahydrodibenzofluorenyl)zirconium dichloride, ethylene[η⁵-(3-n-butylcyclopentadienyl)][η⁵-(2,7-diphenyl-3,6-di-tert-butylfluorenyl)]zirconium dichloride, ethylene[η⁵-(3-n-butylcyclopentadienyl)][η⁵-(2,7-dimethyl-3,6-di-tert-butylfluorenyl)]zirconium dichloride,
diphenylmethylene[η⁵-(3-tert-butyl-5-methylcyclopentadienyl)](η⁵-fluorenyl)zirconiumdichloride, diphenylmethylene[η⁵-(3-tert-butyl-5-methylcyclopentadienyl)][η⁵-(3,6-di-tert-butylfluorenyl)]zirconium dichloride, diphenylmethylene[η⁵-(3-tert-butyl-5-methylcyclopentadienyl)][η⁵-(2,7-di-tert-butylfluorenyl)]zirconium dichloride, diphenylmethylene[η⁵-(3-tert-butyl-5-methylcyclopentadienyl)](octamethyloctahydrodibenzofluorenyl) zirconium dichloride, diphenylmethylene[η⁵-(3-tert-butyl-5-methylcyclopentadienyl)](benzofluorenyl)zirconiumdichloride, diphenylmethylene[η⁵-(3-tert-butyl-5-methylcyclopentadienyl)](dibenzofluorenyl)zirconium dichloride, diphenylmethylene[η⁵-(3-tert-butyl-5-methylcyclopentadienyl)](octahydrodibenzofluorenyl)zirconium dichloride, diphenylmethylene[η⁵-(3-tert-butyl-5-methylcyclopentadienyl)][η⁵-(2,7-diphenyl-3,6-di-tert-butylfluorenyl)]zirconium dichloride, diphenylmethylene[η⁵-(3-tert-butyl-5-methylcyclopentadienyl)][η⁵-(2,7-dimethyl-3,6-di-tert-butylfluorenyl)]zirconium dichloride,
diphenylmethylene[η⁵-(3-tert-butylcyclopentadienyl)](η⁵-fluorenyl) zirconium dichloride, diphenylmethylene[η⁵-(3-tert-butylcyclopentadienyl)][η⁵-(3,6-di-tert-butylfluorenyl)]zirconium dichloride, diphenylmethylene[η⁵-(3-tert-butylcyclopentadienyl)][η⁵-(2,7-di-tert-butylfluorenyl)]zirconium dichloride, diphenylmethylene[η⁵-(3-tert-butylcyclopentadienyl)](octamethyloctahydrodibenzofluorenyl)z irconium dichloride, diphenylmethylene[η⁵-(3-tert-butylcyclopentadienyl)](benzofluorenyl)zirconiumdichloride, diphenylmethylene[η⁵-(3-tert-butylcyclopentadienyl)](dibenzofluorenyl)zirconium dichloride, diphenylmethylene[η⁵-(3-tert-butylcyclopentadienyl)](octahydrodibenzofluorenyl)zirconium dichloride, diphenylmethylene[η⁵-(3-tert-butylcyclopentadienyl)][η⁵-(2,7-diphenyl-3,6-di-tert-butylfluorenyl)]zirconium dichloride, diphenylmethylene[η⁵-(3-tert-butylcyclopentadienyl)][η⁵-(2,7-dimethyl-3,6-di-tert-butylfluorenyl)]zirconium dichloride,
diphenylmethylene[η⁵-(3-n-butylcyclopentadienyl)](η⁵-fluorenyl) zirconium dichloride, diphenylmethylene[η⁵-(3-n-butylcyclopentadienyl)][η⁵-(3,6-di-tert-butylfluorenyl)]zirconium dichloride, diphenylmethylene[η⁵-(3-n-butylcyclopentadienyl)][η⁵-(2,7-di-tert-butylfluorenyl)]zirconium dichloride, diphenylmethylene[η⁵-(3-n-butylcyclopentadienyl)](octamethyloctahydrodibenzofluorenyl)z irconium dichloride, diphenylmethylene[η⁵-(3-n-butylcyclopentadienyl)](benzofluorenyl)zirconiumdichloride, diphenylmethylene[η⁵-(3-n-butylcyclopentadienyl)](dibenzofluorenyl)zirconium dichloride, diphenylmethylene[η⁵-(3-n-butylcyclopentadienyl)](octahydrodibenzofluorenyl)zirconium dichloride, diphenylmethylene[η⁵-(3-n-butylcyclopentadienyl)][η⁵-(2,7-diphenyl-3,6-di-tert-butylfluorenyl)]zirconium dichloride, diphenylmethylene[η⁵-(3-n-butylcyclopentadienyl)][η⁵-(2,7-dimethyl-3,6-di-tert-butylfluorenyl)]zirconium dichloride,
di(p-tolyl)methylene[η⁵-(3-tert-butyl-5-methylcyclopentadienyl)](η⁵-fluorenyl)zirconium dichloride, di(p-tolyl)methylene[η⁵-(3-tert-butyl-5-methylcyclopentadienyl)][η⁵-(3,6-di-tert-butylfluorenyl)]zirconium dichloride, di(p-tolyl)methylene[η⁵-(3-tert-butyl-5-methylcyclopentadienyl)][η⁵-(2,7-di-tert-butylfluorenyl)]zirconium dichloride, di(p-tolyl)methylene[η⁵-(3-tert-butyl-5-methylcyclopentadienyl)](octamethyloctahydrodibenzofluorenyl) zirconium dichloride, di(p-tolyl)methylene[η⁵-(3-tert-butyl-5-methylcyclopentadienyl)](benzofluorenyl) zirconium dichloride, di(p-tolyl)methylene[η⁵-(3-tert-butyl-5-methylcyclopentadienyl)](dibenzofluorenyl)zirconium dichloride, di(p-tolyl)methylene[η⁵-(3-tert-butyl-5-methylcyclopentadienyl)](octahydrodibenzofluorenyl)zirconium dichloride, di(p-tolyl)methylene[η⁵-(3-tert-butyl-5-methylcyclopentadienyl)][η⁵-(2,7-diphenyl-3,6-di-tert-butylfluorenyl)]zirconium dichloride, di(p-tolyl)methylene[η⁵-(3-tert-butyl-5-methylcyclopentadienyl)][η⁵-(2,7-dimethyl-3,6-di-tert-butylfluorenyl)]zirconium dichloride,
di(p-tolyl)methylene[η⁵-(3-tert-butylcyclopentadienyl)](η⁵-fluorenyl)zirconium dichloride, di(p-tolyl)methylene[η⁵-(3-tert-butylcyclopentadienyl)][η⁵-(3,6-di-tert-butylfluorenyl)]zirconium dichloride, di(p-tolyl)methylene[η⁵-(3-tert-butylcyclopentadienyl)][η⁵-(2,7-di-tert-butylfluorenyl)]zirconium dichloride, di(p-tolyl)methylene[η⁵-(3-tert-butylcyclopentadienyl)](octamethyloctahydrodibenzofluorenyl)z irconium dichloride, di(p-tolyl)methylene[η⁵-(3-tert-butylcyclopentadienyl)](benzofluorenyl)zirconiumdichloride, di(p-tolyl)methylene[η⁵-(3-tert-butylcyclopentadienyl)](dibenzofluorenyl)zirconium dichloride, di(p-tolyl)methylene[η⁵-(3-tert-butylcyclopentadienyl)](octahydrodibenzofluorenyl)zirconium dichloride, di(p-tolyl)methylene[η⁵-(3-tert-butylcyclopentadienyl)][η⁵-(2,7-diphenyl-3,6-di-tert-butylfluorenyl)]zirconium dichloride, di(p-tolyl)methylene[η⁵-(3-tert-butylcyclopentadienyl)][η⁵-(2,7-dimethyl-3,6-di-tert-butylfluorenyl)]zirconium dichloride,
di(p-tolyl)methylene[η⁵-(3-n-butylcyclopentadienyl)](η⁵-fluorenyl) zirconium dichloride, di(p-tolyl)methylene[η⁵-(3-n-butylcyclopentadienyl)][η⁵-(3,6-di-tert-butylfluorenyl)]zirconium dichloride, di(p-tolyl)methylene[η⁵-(3-n-butylcyclopentadienyl)][η⁵-(2,7-di-tert-butylfluorenyl)]zirconium dichloride, di(p-tolyl)methylene[η⁵-(3-n-butylcyclopentadienyl)](octamethyloctahydrodibenzfluorenyl)zi rconium dichloride, di(p-tolyl)methylene[η⁵-(3-n-butylcyclopentadienyl)](benzofluorenyl)zirconiumdichloride, di(p-tolyl)methylene[η⁵-(3-n-butylcyclopentadienyl)](dibenzofluorenyl)zirconium dichloride, di(p-tolyl)methylene[η⁵-(3-n-butylcyclopentadienyl)](octahydrodibenzofluorenyl)zirconium dichloride, di(p-tolyl)methylene[η⁵-(3-n-butylcyclopentadienyl)](2,7-diphenyl-3,6-di-tert-butylfluorenyl)zirconiumdichloride, and di(p-tolyl)methylene[η⁵-(3-n-butylcyclopentadienyl)][η⁵-(2,7-dimethyl-3,6-di-tert-butylfluorenyl)]zirconium dichloride.

Examples of the bridged metallocene compound (P) further include the compound in which a zirconium atom of the aforementioned compound is replaced with a hafnium atom or a titanium atom, and the compound in which a chloro ligand is replaced with a methyl group. Herein, η⁵-tetramethyloctahydrodibenzofluorenyl and η⁵-octamethyloctahydrodibenzofluorenyl, as constituent portions of the bridged metallocene compound (P) exemplified, respectively represent a 4,4,7,7-tetramethyl-(5a,5b,11a,12,12a-η⁵)-1,2,3,4,7,8,9,10-octahydrodibenzo[b,H]fluorenyl group and a 1,1,4,4,7,7,10,10-octamethyl-(5a,5b,11a,12,12a-η⁵)-1,2,3,4,7,8,9,10-octahydrodibenzo[b,H]fluorenyl group.

The bridged metallocene compound (P) may be used singly or in combinations of two or more kinds thereof.

### [Compound (Q)]

The compound (Q) is at least one compound selected from the group consisting of an organometal compound (Q-1), an organoaluminum oxy compound (Q-2), and a compound (Q-3) that reacts with the bridged metallocene compound (P) to form an ion pair.

The organometal compound (Q-1) here used is specifically any of organometal compounds (Q-1a), (Q-1b) and (Q-1c) as described below, including elements of Groups I and II and elements of Groups XII and XIII in the periodic table.

(Q-1a) An organoaluminum compound represented by general formula R^{a}ₘAl(OR^{b})ₙHₚX_{q}:
wherein R^{a} and R^{b} are optionally the same as or different from each other and each represent a hydrocarbon group having 1 to 15, preferably 1 to 4 carbon atoms, X represents a halogen atom, m is a number of 0 < m ≤ 3, n is a number of 0 ≤ n < 3, p is a number of 0 ≤ p < 3, q is a number of 0 ≤ q < 3, and m + n + p + q = 3 is satisfied.

Examples of such a compound can include tri-n-alkylaluminum such as trimethylaluminum, triethylaluminum, tri-n-butylaluminum, tri-n-hexylaluminum and tri-n-octylaluminum, tri-branched alkylaluminum such as triisopropylaluminum, triisobutylaluminum, tri-sec-butylaluminum, tri-tert-butylaluminum, tri-2-methylbutylaluminum, tri-3-methylhexylaluminum and tri-2-ethylhexylaluminum, tricycloalkylaluminum such as tricyclohexylaluminum and tricyclooctylaluminum, triarylaluminum such as triphenylaluminum and tri(4-methylphenyl)aluminum, dialkylaluminum hydrides such as diisopropylaluminum hydride and diisobutylaluminum hydride, alkenylaluminum represented by general formula (i-C₄H₉)ₓAl_{y}(C₅H₁₀)_{z} (wherein x, y and z are positive numbers and z ≤ 2x is satisfied.), such as isoprenylaluminum, alkylaluminum alkoxides such as isobutylaluminum methoxide and isobutylaluminum ethoxide, dialkylaluminum alkoxides such as dimethylaluminum methoxide, diethylaluminum ethoxide and dibutylaluminumbutoxide, alkylaluminum sesquialkoxides such as ethylaluminum sesquiethoxide and butylaluminum sesquibutoxide, partially alkoxylated alkylaluminum having an average compositional ratio represented by, for example, general formula R^{a}_{2.5}Al(OR^{b})_{0.5}, alkylaluminum aryloxides such as diethylaluminum phenoxide and diethylaluminum(2,6-di-tert-butyl-4-methylphenoxide), dialkylaluminum halides such as dimethylaluminum chloride, diethylaluminum chloride, dibutylaluminum chloride, diethylaluminum bromide and diisobutylaluminum chloride, alkylaluminum sesquihalides such as ethylaluminum sesquichloride, butylaluminum sesquichloride and ethylaluminum sesquibromide, partially halogenated alkylaluminum of, for example, alkylaluminum dihalides such as ethylaluminum dichloride, dialkylaluminum hydrides such as diethylaluminum hydride and dibutylaluminum hydride, alkylaluminum dihydrides such as ethylaluminum dihydride and propylaluminum dihydride and other partially hydrogenated alkylaluminum, and partially alkoxylated and halogenated alkylaluminum such as ethylaluminum ethoxychloride, butylaluminum butoxychloride and ethylaluminum ethoxybromide. A compound similar to the compound represented by the general formula R^{a}ₘAl(OR^{b})ₙHₚX_{q} can also be used, and examples thereof can include an organoaluminum compound in which two or more aluminum compounds are bonded via a nitrogen atom. Specific examples of such a compound can include

(C₂H₅)₂AlN(C₂H₅)Al(C₂H₅)₂.

(Q-1b) A complex alkylated compound of a Group I metal of the periodic table and aluminum, represented by the general formula M²AlR^{a}₄ wherein M² represents Li, Na or K, and R^{a} represents a hydrocarbon group having 1 to 15 carbon atoms, preferably a hydrocarbon group having 1 to 4 carbon atoms.

Examples of such compounds include LiAl(C₂H₅)₄ and LiAl(C₇H₁₅)4.

(Q-1c) A dialkylated compound of a Group II or Group XII metal of the periodic table, represented by the general formula R^{a}R^{b}M³ wherein R^{a} and R^{b} may be the same as or different from each other and represent a hydrocarbon group having 1 to 15 carbon atoms, preferably a hydrocarbon group having 1 to 4 carbon atoms, and M³ is Mg, Zn or Cd.

A heretofore known aluminoxane can be used as it is, as the organoaluminum oxy compound (Q-2). Specific examples can include a compound represented by the following general formula [III] and a compound represented by the following general formula [IV].

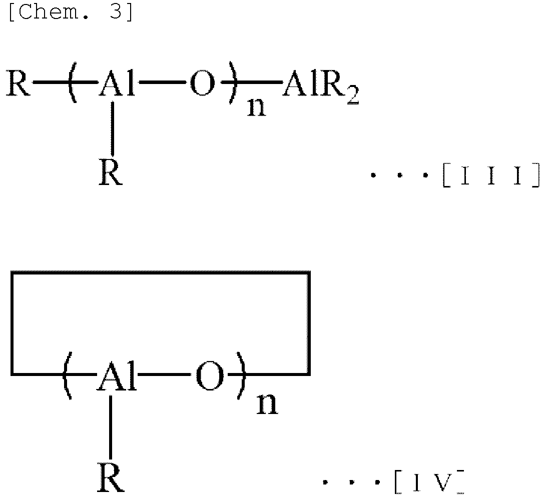

In the formulas [III] and [IV], R represents a hydrocarbon group having 1 to 10 carbon atoms, and n represents an integer of 2 or more.

In particular, methylaluminoxane is utilized in which R is a methyl group and n is 3 or more, preferably 10 or more. An organoaluminum compound is allowed to be slightly incorporated in such aluminoxane.

When copolymerization of ethylene and an α-olefin having 3 or more carbon atoms is performed at a high temperature in the present invention, a benzene-insoluble organoaluminum oxy compound exemplified in JP H2-78687A can also be applied. An organoaluminum oxy compound described in JP H2-167305A, or aluminoxane having two or more alkyl groups, described in JP H2-24701A and JP H3-103407A, can also be suitably utilized. The "benzene-insoluble organoaluminum oxy compound" that may be used in an aspect of the present invention is a compound that usually contains 10% or less, preferably 5% or less, particularly preferably 2% or less of an Al component to be dissolved in benzene at 60°C, in terms of Al atom, and that is insoluble or hardly soluble in benzene.

Examples of the organoaluminum oxy compound (Q-2) can also include modified methylaluminoxane represented by the following general formula [V].

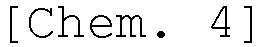

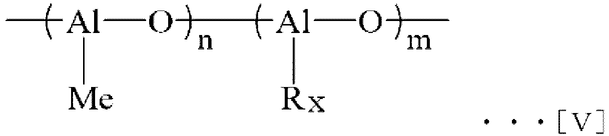

In the formula [V], Rx represents a hydrocarbon group having 1 to 10 carbon atoms, and m and n each independently represent an integer of 2 or more.

Methylaluminoxane as one example of the organoaluminum oxy compound (Q-2) is easily available and has high polymerization activity, and thus is commonly used as an activator in olefin polymerization. However, methylaluminoxane has been used as solutions of aromatic hydrocarbons such as toluene or benzene, which are environmentally undesirable, because it is difficult to dissolve in saturated hydrocarbons. Therefore, a flexible body of methylaluminoxane represented by formula [V] has been recently developed and used as aluminoxane dissolved in a saturated hydrocarbon. Such modified methylaluminoxane represented by the formula [V] is prepared by using trimethylaluminum and alkylaluminum other than trimethylaluminum as described in, for example, US Pat. No. 4960878 and US Pat. No. 5041584, and, for example, is prepared by using trimethylaluminum and triisobutylaluminum. Aluminoxane in which Rx is an isobutyl group is commercially available, in the form of a solution in a saturated hydrocarbon, under any of trade names MMAO and TMAO (see Tosoh Finechem Corporation, Tosoh Research & Technology Review, Vol 47, 55 (2003)).

Examples of the organoaluminum oxy compound (Q-2) can further include an organoaluminum oxy compound represented by the following general formula [VI], containing boron.

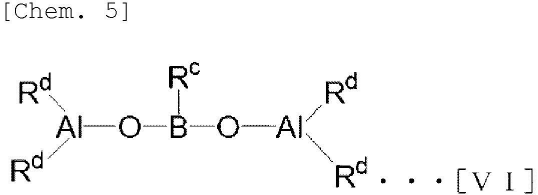

In the formula [VI], R^{c} represents a hydrocarbon group having 1 to 10 carbon atoms. R^{d}(s) are optionally the same as or different from one another, and each represent a hydrogen atom, a halogen atom or a hydrocarbon group having 1 to 10 carbon atoms.

Examples of the compound (Q-3) that reacts with the bridged metallocene compound (P) to form an ionic pair (hereinafter may be abbreviated and referred to as "ionized ionic compound" or simply "ionic compound") can include Lewis acids, ionic compounds, borane compounds and carborane compounds, for example, which are described in JPH1-501950A, JPH1-502036A, JPH3-179005A, JPH3-179006A, JPH3-207703A, JPH3-207704A, USP 5321106, for example. Further examples also include heteropoly compounds and isopoly compounds.

The ionized ionic compound preferably used in an aspect of the present invention is a boron compound represented by the following general formula [VII].

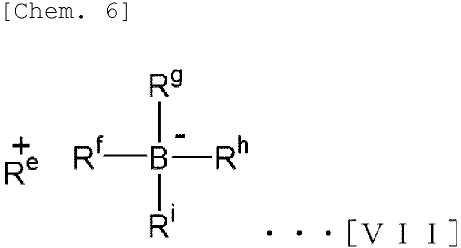

Examples of R^{e+} in the formula [VII] include H⁺, carbenium cation, oxonium cation, ammonium cation, phosphonium cation, cycloheptyltrienyl cation, and ferrocenium cation having a transition metal. R^{f} to Rⁱ are optionally the same as or different from one another, and are each a substituent selected from a hydrocarbon group having 1 to 20 carbon atoms, a silicon-containing group, a nitrogen-containing group, an oxygen-containing group, a halogen atom and a halogen-containing group, preferably a substituted aryl group.

Specific examples of the carbenium cation include trisubstituted carbenium cations such as triphenylcarbenium cation, tris(4-methylphenyl)carbenium cation and tris(3,5-dimethylphenyl)carbenium cation.

Specific examples of the ammonium cation include trialkyl-substituted ammonium cations such as trimethylammonium cation, triethylammonium cation, tri(n-propyl)ammonium cation, triisopropylammonium cation, tri(n-butyl)ammonium cation and triisobutylammonium cation, N,N-dialkylanilinium cations such as N,N-dimethylanilinium cation, N,N-diethylanilinium cation and N,N-2,4,6-pentamethylanilinium cation, and dialkylammonium cations such as diisopropylammonium cation and dicyclohexylammonium cation.

Specific examples of the phosphonium cation include triarylphosphonium cations such as triphenylphosphonium cation, tris(4-methylphenyl)phosphonium cation and tris(3,5-dimethylphenyl)phosphonium cation.

R^{e+}, among the above specific examples, is preferably, for example, the carbenium cation or the ammonium cation, particularly preferably triphenylcarbenium cation, N,N-dimethylanilinium cation or N,N-diethylanilinium cation.

Examples of the carbenium cation-containing compound among the ionized ionic compound preferably used in an aspect of the present invention can include triphenylcarbenium tetraphenylborate, triphenylcarbenium tetrakis(pentafluorophenyl)borate, triphenylcarbenium tetrakis{3,5-di-(trifluoromethyl)phenyl}borate, tris(4-methylphenyl)carbenium tetrakis(pentafluorophenyl)borate and tris(3,5-dimethylphenyl)carbenium tetrakis(pentafluorophenyl)borate.

Examples of the trialkyl-substituted ammonium cation-containing compound among the ionized ionic compound preferably used in an aspect of the present invention can include triethylammonium tetraphenylborate, tripropylammonium tetraphenylborate, tri(n-butyl)ammonium tetraphenylborate, trimethylammonium tetrakis(4-methylphenyl)borate, trimethylammonium tetrakis(2-methylphenyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis{4-(trifluoromethyl)phenyl}borate, tri(n-butyl)ammonium tetrakis{3,5-di(trifluoromethyl)phenyl}borate, tri(n-butyl)ammonium tetrakis(2-methylphenyl)borate, dioctadecylmethylammonium tetraphenylborate, dioctadecylmethylammonium tetrakis(4-methylphenyl)borate, dioctadecylmethylammonium tetrakis(4-methylphenyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis{4-(trifluoromethyl)phenyl}borate, dioctadecylmethylammonium tetrakis{3,5-di(trifluoromethyl)phenyl}borate and dioctadecylmethylammonium.

Examples of the N,N-dialkylanilinium cation-containing compound among the ionized ionic compound preferably used in an aspect of the present invention can include N,N-dimethylanilinium tetraphenylborate, N,N-dimethylanilinium tetrakis(pentafluorophenyl)borate, N,N-dimethylanilinium tetrakis{3,5-di(trifluoromethyl)phenyl}borate, N,N-diethylanilinium tetraphenylborate, N,N-diethylanilinium tetrakis(pentafluorophenyl)borate, N,N-diethylanilinium tetrakis{3,5-di(trifluoromethyl)phenyl}borate, N,N-2,4,6-pentamethylanilinium tetraphenylborate and N,N-2,4,6-pentamethylanilinium tetrakis(pentafluorophenyl)borate.

Examples of the dialkylammonium cation-containing compound among the ionized ionic compound preferably used in an aspect of the present invention can include di-n-propylammonium tetrakis(pentafluorophenyl)borate and dicyclohexylammonium tetraphenylborate.

Other ionic compounds exemplified in Patent Literature JP-A 2004-51676 can also be used without any limitation.

The aforementioned ionic compound (Q-3) may be used singly or in combinations of two or more kinds thereof.

Examples of the configuration of the catalyst system include the following [1] to [4].
[1] The catalyst system includes the bridged metallocene compound (P) and the compound (Q-2).
[2] The catalyst system includes the bridged metallocene compound (P), the compound (Q-1) and the compound (Q-2).
[3] The catalyst system includes the bridged metallocene compound (P), the compound (Q-1) and the compound (Q-3).
[4] The catalyst system includes the bridged metallocene compound (P), the compound (Q-2) and the compound (Q-3).

The bridged metallocene compound (P), and the compounds (Q-1) to (Q-3) may be introduced into the reaction system in any order.

### [Carrier (R)]

A carrier (R) may be, if necessary, used as a constituent component of the olefin polymerization catalyst in an aspect of the present invention.

The carrier (R) is an inorganic or organic compound and is a granular or fine particulate solid. In particular, the inorganic compound is preferably porous oxide, inorganic chloride, clay, clay mineral or an ion-exchangeable layered compound.

The porous oxide used can be specifically, for example, SiO₂, Al₂O₃, MgO, ZrO, TiO₂, B₂O₃, CaO, ZnO, BaO or ThO₂, or a composite or a mixture including such an oxide, for example, natural or synthetic zeolite, SiO₂-MgO, SiO₂-Al₂O₃, SiO₂-TiO₂, SiO₂-V₂O₅, SiO₂-Cr₂O₃ or SiO₂-TiO₂-MgO. In particular, one mainly containing SiO₂ and/or Al₂O₃ is preferable. Such porous oxide differs in properties depending on the type and the production method, and the carrier preferably used in an aspect of the present invention has a particle size in a range from 0.5 to 300 µm, preferably 1.0 to 200 µm, a specific surface area in a range from 50 to 1000 m²/g, preferably 100 to 700 m²/g, and a pore volume in a range from 0.3 to 3.0 cm³/g. Such a carrier is, if necessary, fired at 100 to 1,000°C, preferably 150 to 700°C, and then used.

The inorganic chloride used is, for example, MgCl₂, MgBr₂, MnCl₂ or MnBr₂. The inorganic chloride may be used as it is, or may be pulverized by a ball mill or a vibrating mill, and then used. Alternatively, the inorganic chloride, which is dissolved in a solvent such as an alcohol and then precipitated in the form of fine particles by a precipitating agent, may also be used.

Clay is usually constituted with clay mineral as a main component. The ion-exchangeable layered compound is a compound having a crystal structure in which surfaces configured are mutually stacked in parallel by a weak force with, for example, an ionic bond, and includes an exchangeable ion. Most clay mineral corresponds to such an ion-exchangeable layered compound. Such clay, clay mineral, and ion-exchangeable layered compound here used are not limited to natural products, and can also be artificially synthesized products. Examples of the clay, clay mineral or ion-exchangeable layered compound can include clay, clay mineral, and ionic crystalline compounds having a layered crystal structure, such as a hexagonal closest packing type, an antimony type, a CdCl₂ type and a CdI₂ type. Examples of such clay and clay mineral include kaolin, bentonite, kibushi clay, gairome clay, allophane, hisingerite, pyrophyllite, mica, montmorillonite, vermiculite, chlorite rocks, palygorskite, kaolinite, nacrite, dickite and halloysite, and examples of such an ion-exchangeable layered compound include crystalline acidic salts of polyvalent metals, such as α-Zr(HAsO₄)₂·H₂O, α-Zr(HPO₄)₂, α-Zr(KPO)₂·3H₂O, α-Ti(HPO₄)₂, α-Ti(HAsO₄)₂·H₂O, α-Sn(HPO₄)₂·H₂O, γ-Zr(HPO₄)₂, γ-Ti(HPO₄)₂ and γ-Ti(NH₄PO₄)₂·H₂O. The clay and the clay mineral for use in an aspect of the present invention are also preferably subjected to a chemical treatment. The chemical treatment here used can be any treatment such as a surface treatment for removal of impurities attached to a surface, or a treatment having an effect on the crystal structure of the clay. Specific examples of the chemical treatment include an acid treatment, an alkali treatment, a salt treatment and an organic substance treatment.

The ion-exchangeable layered compound may be a layered compound where a space between layers is enlarged by exchanging an exchangeable ion in the space between layers with another large and bulky ion by means of ion exchangeability. Such a bulky ion serves as a shore supporting a layered structure, and is usually referred to as pillar. Such introduction of another substance (guest compound) into the space between layers in the layered compound is referred to as intercalation. Examples of the guest compound include cationic inorganic compounds such as TiCl₄ and ZrCl₄, metal alkoxides (R represents, for example, a hydrocarbon group) such as Ti(OR)₄, Zr(OR)₄, PO(OR)₃ and B(OR)₃, and metal hydroxide ions such as [Al₁₃O₄(OH)₂₄]⁷⁺, [Zr₄(OH)₁₄]²⁺ and [Fe₃O(OCOCH₃)₆]⁻. Such a compound may be used singly or in combinations of two or more kinds thereof. In intercalation of such a compound, for example, a polymerized product obtained by hydrolytic polycondensation of a metal alkoxide (R represents, for example, a hydrocarbon group) such as Si(OR)₄, Al(OR)₃ or Ge(OR)₄, or a colloidal inorganic compound such as SiO₂ can also co-exist. Examples of the pillar include oxide generated by intercalation of the aforementioned metal hydroxide ion into the space between layers and then heating and dehydration.

In particular, the clay or the clay mineral is preferable, and montmorillonite, vermiculite, pectolite, tainiolite and synthetic mica are particularly preferable.

Examples of the organic compound as the carrier (R) can include a granular or fine particulate solid having a particle size in a range from 0.5 to 300 µm. Specific examples thereof include (co)polymers produced with an α-olefin having 2 to 14 carbon atoms such as ethylene, propylene, 1-butene, and 4-methyl-1-pentene as the main component, (co)polymers produced with vinylcyclohexane or styrene as the main component, and modified products thereof.

The usage method and the order of addition of each component of the polymerization catalyst can be arbitrarily selected. At least two or more components in the catalyst may be contacted with each other in advance.

The bridged metallocene compound (P) (hereinafter, also referred to as "component (P)") is used in an amount of usually 1 × 10⁻⁹ to 10⁻¹ mol, preferably 1 × 10⁻⁸ to 1 × 10⁻² mol per liter of a reaction volume.

The organometal compound (Q-1) (hereinafter, also referred to as "component (b-1)".) is usually used in an amount so that the molar ratio [(Q-1)/M] of the component (Q-1) to a transition metal atom (M) in the component (P) is usually 0.01 to 50,000, preferably 0.05 to 10,000.

The organoaluminum oxy compound (Q-2) (hereinafter, also referred to as "component (Q-2)".) is used in an amount so that the molar ratio [(Q-2)/M] of the aluminum atom in the component (Q-2) to the transition metal atom (M) in the component (P) is usually 10 to 5,000, preferably 20 to 2,000.

The ionic compound (Q-3) (hereinafter, also referred to as "component (Q-3)".) is used in an amount so that the molar ratio [(Q-3)/M] of the component (Q-3) to the transition metal atom (M) in the component (P) is usually 1 to 10,000, preferably 1 to 5,000.

The polymerization temperature is usually -50 to 300°C, preferably 30 to 250°C, more preferably 100 to 250°C, further preferably 130 to 200°C. As the temperature in the polymerization temperature region in the above range is higher, the solution viscosity during polymerization is lower, and removal of heat of polymerization is also easier. The polymerization pressure is usually ordinary pressure to 10 MPa-gauge pressure (MPa-G), preferably ordinary pressure to 8 MPa-G.

The polymerization reaction can be carried out in any method of batchwise, semi-continuous, and continuous methods. Such polymerization can also be continuously carried out in two or more polymerization instruments different in reaction conditions.

The molecular weight of the resulting copolymer can be regulated by the changes in hydrogen concentration and polymerization temperature in a polymerization system. The molecular weight can also be regulated by the amount of the component (Q) used.
In the case of addition of hydrogen, the amount added is properly about 0.001 to 5,000 NL per kg of the copolymer.

The polymerization solvent for use in a liquid phase polymerization method is usually an inert hydrocarbon solvent, and is preferably a saturated hydrocarbon having a boiling point of 50 to 200°C under ordinary pressure.

Specific examples of the polymerization solvent include aliphatic hydrocarbons such as propane, butane, pentane, hexane, heptane, octane, decane, dodecane and kerosene oil, and alicyclic hydrocarbons such as cyclopentane, cyclohexane and methylcyclopentane, and particularly preferably include hexane, heptane, octane, decane and cyclohexane. The α-olefin to be polymerized, by itself, can also be used as the polymerization solvent. While an aromatic hydrocarbon such as benzene, toluene or xylene, or a halogenated hydrocarbon such as ethylene chloride, chlorobenzene or dichloromethane can also be used as the polymerization solvent, use thereof is not preferable in terms of a reduction in load on the environment and in terms of minimization of the influence on human health.

The kinematic viscosity at 100°C of the copolymer (A) depends on the molecular weight of the polymer. In other words, a high molecular weight leads to a high viscosity and a low molecular weight leads to a low viscosity, and thus the kinematic viscosity at 100°C is adjusted by the above molecular weight adjustment. A low molecular weight component in a polymer obtained can be removed by a conventionally known method such as distillation under reduced pressure, to thereby allow for adjustment of the molecular weight distribution (Mw/Mn) of the polymer obtained. The polymer obtained may be further subjected to hydrogen addition (hereinafter, also referred to as hydrogenation.) by a conventionally known method. If the number of double bonds in the polymer obtained by such hydrogenation is reduced, oxidation stability and heat resistance are enhanced.

The obtained copolymers (A) may be used singly or in combinations of two or more copolymers of different molecular weights or of different monomer compositions.

### <Unsaturated monomer (B)>

The unsaturated monomer (B) forming the graft part of the modified copolymer (X) which is one of components contained in the present composition satisfies the following requirement (b-1).

### <Requirement (b-1)>

The unsaturated monomer (B) is at least one unsaturated carboxylic acid-based monomer selected from the group consisting of an unsaturated carboxylic acid having 3 to 10 carbon atoms, and a derivative thereof.

As the unsaturated carboxylic acid having 3 to 10 carbon atoms, specifically, acrylic acid, methacrylic acid maleic acid, fumaric acid, tetrahydrophthalic acid, itaconic acid, citraconic acid, crotonic acid, isocrotonic acid, and nadic acid^{™} (endosis-bicyclo[2,2,1]hept-5-ene-2,3-dicarboxylic acid) can be exemplified.

Examples of the derivative of the unsaturated carboxylic acid can include an acid halide compound, an amide compound, an imide compound, an acid anhydride, and an ester compound of the unsaturated carboxylic acid. Specifically, malonyl chloride, maleimide, maleic anhydride, itaconic anhydride, citraconic anhydride, tetrahydrophthalic anhydride, methyl acrylate, methyl methacrylate, monomethyl maleate, dimethyl maleate, diethyl fumarate, dimethyl itaconate, diethyl citraconate, dimethyl tetrahydrophthalic anhydride, 2-hydroxyethyl acrylate, 2-hydroxyethyl methacrylate, and glycidyl maleate can be exemplified.

Among these, unsaturated dicarboxylic acid and derivatives thereof are more preferred, maleic acid and acid anhydrides thereof are still more preferred, and maleic anhydride is particularly preferred.

The unsaturated monomers (B) can be used singly, or in combination of two or more thereof.

The unsaturated monomer (B) may be a single monomer obtained from a biomass-derived raw material, a single monomer obtained from a fossil fuel-derived raw material, or a mixture of a monomer obtained from a biomass-derived raw material and a monomer obtained from a fossil fuel-derived raw material.

### <Method for producing modified copolymer (X)>

The modified copolymer (X) can be prepared by any of heretofore known methods, for example, the following methods.
(1) A method in which the copolymer (A) is mixed in, for example, an extruder or a batch-type reactor, and the unsaturated monomer (B) is added to perform graft copolymerization.
(2) A method in which the copolymer (A) is dissolved in a solvent, and the unsaturated monomer (B) is added to perform graft copolymerization.

In all of the production methods described above, the graft reaction is preferably carried out in the presence of a radical initiator for efficiently performing graft copolymerization of the unsaturated monomer (B).

Examples of the radical initiator include organic peroxides and azo compounds. Examples of the organic peroxides include benzoyl peroxide, dichlorobenzoyl peroxide, and dicumyl peroxide, and examples of the azo compounds include azobisisobutyronitrile and dimethylazoisobutyrate.

As such a radical initiator, specifically, dialkyl peroxides such as dicumyl peroxide, di-tert-butyl peroxide, 2,5-dimethyl-2,5-di(tert-butylperoxy)hexyne-3, 2,5-dimethyl-2,5-di(tert-butylperoxy)hexane, and 1,4-bis(tert-butylperoxyisopropyl)benzene are preferably used.

From the viewpoint of sufficiently developing the radical reaction, the amount of the radical initiator used is usually 0.001 parts by mass or more, preferably 0.003 parts by mass or more, and more preferably 0.05 parts by mass or more per 100 parts by mass of the copolymer (A). On the other hand, the upper limit of the radical initiator used is not particularly limited as long as the effect of the present invention is not impaired. The upper limit of the radical initiator used is, for example, 5 parts by mass or less per 100 parts by mass of the copolymer (A). Here, in an aspect of the present invention, the amount of the radical initiator used is preferably 0.001 to 1 parts by mass, more preferably 0.003 to 0.5 parts by mass, still more preferably 0.05 to 0.3 parts by mass per 100 parts by mass of the copolymer (A). However, depending on a type of the copolymer (A), the amount of the radical initiator used per 100 parts by mass of the copolymer (A) may be more than 1 part by mass, and may be, for example, preferably 1 to 3 parts by mass.

The reaction temperature in the graft reaction using the radical initiator described above or the graft reaction carried out without using a radical initiator is usually set in the range of 60 to 350°C, and preferably 120 to 300°C.

The content of the modified copolymer (X) in the present composition is preferably 0.1 to 10% by mass relative to 100% by mass of the composition. The lower limit value of the content of the modified copolymer (X) is more preferably 0.2% by mass, and still more preferably 0.5% by mass. The upper limit value of the content of the modified copolymer (X) is more preferably 8% by mass, and still more preferably 5% by mass. When the content of the modified copolymer (X) is within the above-described range, the antifoaming action of the modified copolymer (X) is sufficiently exhibited.

### «Amine compound (Y)»

The present composition includes the amine compound (Y). The amine compound (Y) satisfies the following requirement (y-2), and preferably further satisfies the following requirement (y-1).
(y-1) a molecular weight is 1,000 or less.
(y-2) One or more hydroxyl groups are present in the molecule.

### <Requirement (y-1)>

This molecular weight (Y) is preferably 1,000 or less, more preferably 800 or less, and still more preferably 500 or less. When the molecular weight of the amine compound (Y) is in the above-described range, the emulsifiability of modified copolymer (X) in water tends to be improved.

### <Requirement (y-2)>

The amine compound (Y) is one or more hydroxyl groups in the molecule. The aqueous lubricant composition including the amine compound (Y) having one or more hydroxyl groups in the molecule is excellent in dispersibility of the modified copolymer (X), later-described silicone oil (Z) and a surfactant in water, and the composition has excellent emulsion stability.

From the same viewpoint as described above, at least one of hydroxyl groups present in the molecule of the amine compound (Y) is preferably bonded to primary carbon.

Examples of the amine compound (Y) include first amine compounds such as 2-amino-2-methyl-1-propanol, 2-(2-aminoethoxy)ethanol, 2-aminoethanol and 1-amino-2-propanol; secondary amine compounds such as diethanolamine and 2-methylaminoethanol; and tertiary amine compounds such as triethanolamine and 2-(dimethyl)aminoethanol. From the viewpoint of, for example, the emulsifiability of the modified copolymer (X) in water, primary amine compounds are preferred, and 2-amino-2-methyl-1-propanol, and 2-(2-aminoethoxy)ethanol are more preferred.

The amine compounds (Y) can be used singly, or in combination of two or more thereof.

The content of the amine compound (Y) can be appropriately changed according to the number of hydroxyl groups in the molecule, but is preferably 10 to 60 parts by mass, more preferably 10 to 50 parts by mass, still more preferably 15 to 50 parts by mass per 100 parts by mass of the modified copolymer (X).

### <<Silicone oil (Z)>>

The present composition includes, as a lubricating oil component, at least one silicone oil (Z) selected from the group consisting of alkyl-modified silicone oil and alkyl aralkyl-modified silicone oil. The silicone oil (Z) preferably satisfies the following requirement (z-1). (z-1) The viscosity at 25°C is 20 mm²/s or more.

### <Requirement (z-1)>

The viscosity of the silicone oil (Z) at 25°C is preferably 20 mm²/s or more, more preferably 50 mm²/s or more, and still more preferably 200 mm²/s or more. When the viscosity of the silicone oil (Z) is in the above-described range, the use of the present composition as a lubricant (mold release agent) ensures excellent mold release properties.

Examples of the silicone oil (Z) include alkyl-modified silicone oil, and alkyl aralkyl-modified silicone oil, with alkyl aralkyl modified silicone oil being preferred.

The silicone oil (Z) may be blended in the form of an emulsion during preparation of the present composition. The emulsion is not particularly limited as long as the effect of the present invention is not impaired. The emulsion preferably has a non-volatile content concentration of about 10 to 70% by mass. The terms "non-volatile content composition" means a concentration of non-volatile components other than the dispersion medium, which include the silicone oil (Z), and additives added if necessary, such as an emulsifier.

The silicone oils (Z) can be used singly, or in combination of two or more thereof.

The content of the silicone oil (Z) is preferably 10 to 50% by mass relative to 100% by mass of the present composition. The lower limit value of the content of the silicone oil (Z) is more preferably 12% by mass, still more preferably 15% by mass, and particularly preferably 20 mass%. The upper limit value of the content of the silicone oil (Z) is more preferably 45% by mass, and still more preferably 40% by mass.

### <<Surfactant>>

The present composition includes a surfactant. The surfactant promotes the emulsification of the modified copolymer (X) and the silicone oil (Z) in water.

Examples of the surfactant include anionic surfactants such as alkylnaphthalenesulfonic acid salts, sodium dodecylbenzenesulfonate, sodium lauryl sulfate, sodium salts of formaldehyde condensates, sodium alkyl diphenyl ether disulfonate, sodium melanin resin sulfonate, special polyacrylic acid salts, potassium oleate, olefin/maleic acid copolymers, carboxymethylcellulose sodium salts, potassium stearate, sodium stearate, and triethanolamine stearate; nonionic surfactants such as fatty acid monoglyceride, sorbitan fatty acid esters, polyglycerin fatty acid partial esters, polyoxyethylene alkylphenyl ether, polyoxyethylene sorbitan partial esters, polyoxyethylene sorbitol fatty acid partial esters, polyoxyethylene glycerin fatty acid partial esters, polyoxyethylene fatty acid amine, polyoxyethylene (hardened) castor oil, polyoxyethylene glycol fatty acid esters, hydroxyethylcellulose, polyvinyl alcohol, and methylcellulose; amphoteric surfactants such as alkylammonium chloride, trimethyl alkyl ammonium bromide, alkyl pyridinium chloride, and casein; water-soluble polyvalent metal salts, with nonionic surfactants being preferred.

The surfactants can be used singly, or in combination of two or more thereof.

The content of the surfactant is preferably 10 to 50 parts by mass, more preferably 15 to 45 parts by mass, and still more preferably 20 to 40 parts by mass per 100 parts by mass of the modified copolymer (X).

### <<Water>>

The present composition includes water. The content of the water is preferably 10 to 70% by mass, more preferably 20 to 70% by mass, and still more preferably 30 to 65% by mass relative to 100% by mass of the composition. As a dispersion medium for emulsifying, dispersing or solubilizing the lubricating oil component, water is mainly used, but a water-soluble solvent may be used by being added thereto as long as it does not have adverse effects such as demulsification in emulsification, dispersion or solubilization of the entire system, and does not deteriorate the quality of a metallic mold by, for example, corrosion, reaction and degradation when the composition is used as a lubricant (mold release agent).

Examples of the water-soluble solvent include glycol-based solvents such as ethylene glycol, diethylene glycol and triethylene glycol; carbitol-based solvents such methyl carbitol and ethyl carbitol; and pyrrolidone-based solvents such as 2-pyrrolidone and N-methylpyrrolidone. These solvents can be used singly, or in combination of two or more thereof. The amount of the water-soluble solvent added is preferably 1 to 70 parts by mass, and more preferably 5 to 65 parts by mass per 100 parts by mass of water.

### <Other components>

If necessary, the present composition may include, in addition to the modified copolymer (X), the amine compound (Y), the silicone oil (Z), the surfactant and water, other components as long as the effect of the present invention is not impaired.

Examples of the other component include resin components other than the modified copolymer (X), basic compounds other than the amine compound (Y), lubricating oil components other than the silicone oil (Z), emulsifiers, anticorrosive agents, antioxidants, antiseptic agents, rust-proof agents, metal deactivators, antiwear additives, antifoaming agents, pour-point depressants, detergent-dispersants, water softeners, chelating agents, pH adjusters, dyes, pigments, antifoaming agents, and fragrances.

The other components can be used singly, or in combination of two or more thereof.

### <<Method for producing aqueous lubricant composition>>

The present composition can be produced by, for example, the following methods: (1) a method in which a water dispersion composition containing the modified copolymer (X), the amine compound (Y), the silicone oil (Z) and a surfactant, and an aqueous solution of the silicone oil (Z) are mixed; or (2) a method in which an oil droplet component containing the modified copolymer (X), the amine compound (Y), the silicone oil (Z) and a surfactant is emulsified in water. The method described above will be described in detail below.

### ·Method (1)

First, the modified copolymer (X), the amine compound (Y), a surfactant, water and if necessary, other components are mixed by stirring as appropriate to prepare a water dispersion composition. If necessary, the components or the mixed liquid may be heated to 40 to 70°C during the stirring/mixing. The order of adding the components is not particularly limited as long as the components can be uniformly dissolved or dispersed. For example, by adding, to a mixture of the modified copolymer (X) and the surfactant, the amine compound (Y) and water in the stated order with stirring, followed by mixing, a uniform water dispersion composition tends to be obtained. For uniformly dissolving or dispersing the components, the components may be blended in an organic solvent, followed by stirring and mixing. The organic solvent is not particularly limited and may be an aqueous or non-aqueous solvent as long as the components can be uniformly dissolved or dispersed. A low-boiling organic solvent that can be distilled away afterwards is preferred.

Next, the silicone oil (Z) and water are mixed by stirring or shaking as appropriate to prepare a lubricating oil component-containing aqueous solution. The order of adding the components is not particularly limited as long as the components can be uniformly dissolved or dispersed. For example, by stirring and mixing a silicone oil (Z)-containing emulsion and water, an aqueous solution tends to be easily obtained at room temperature. The concentration of the silicone oil (Z) in the aqueous solution is not particularly limited as long as the components can be uniformly dissolved or dispersed. The concentration may be appropriately adjusted by taking into account the physical properties such as viscosity of the silicone oil (Z), and the non-volatile content concentration of a silicone oil (Z)-containing emulsion if it is used.

The water dispersion composition and the lubricating oil component-containing aqueous solution are mixed by stirring or shaking as appropriate, whereby the lubricating oil component is emulsified in water to obtain the present composition.

As a unit for use in the mixing, any of known stirrers or shakers may be used.

### ·Method (2)

First, the modified copolymer (X), the amine compound (Y), the silicone oil (Z), a surfactant, and if necessary, other components are mixed by stirring as appropriate to prepare an oil droplet component. If necessary, the components or the mixed liquid may be heated to 40 to 70°C during the stirring/mixing. The order of adding the components is not particularly limited as long as the components can be uniformly dissolved and dispersed. For uniformly dissolving or dispersing the components, the components may be blended in an organic solvent, followed by stirring and mixing. The organic solvent is not particularly limited and may be an aqueous or non-aqueous solvent as long as the components can be uniformly dissolved or dispersed. A low-boiling organic solvent that can be distilled away afterwards is preferred. Among the components, water-soluble components (for example, the amine compound (Y) and the surfactant) may be added in emulsification described later.

Next, the obtained oil droplet component is emulsified in water to obtain the present composition. Examples of the method of emulsification include a method in which water and, if necessary water-soluble components (for example, the amine compound (Y) and the surfactant) are added to the oil droplet component under strong stirring to perform phase-transfer emulsification.

The other components to be added if necessary may be added to the oil droplet component before emulsification, or may be added to the aqueous dispersion after emulsification.

In the present composition, when the organic solvent arbitrarily blended during stirring/mixing is unnecessary, the organic solvent may be distilled away from the aqueous dispersion after emulsification.

The unit for use in phase-transfer may be any of those that are known. Preferably, a kneader, a Banbury mixer, and multiple-screw extruder can be exemplified.

It is desirable to adjust the solid content of the present composition usually to 1 to 50% by mass, and preferably to 1 to 40% by mass.

The present composition can be preferably used for mold release agents (lubricants) for die-casting. When the present composition is used as a mold release agent for die-casting, the number of the operations of removing lubricant-derived heat-degraded materials on the metallic mold and the periphery of the machine can be reduced, so that reduction of the cycle time in die casting, that is, improvement of operation efficiency can be expected.

### Examples

Hereinafter an example of an aspect of the present invention will be described in detail with reference to Examples, but the present invention is not limited to these Examples.

In Examples and Comparative Examples, each physical property was measured or evaluated by the following methods.

### [Weight-average molecular weight (Mw) and molecular weight distribution (Mw/Mn)]

Mw and Mw/Mn were determined by the following high-speed GPC measurement apparatus.
Measuring equipment: HLC8320GPC manufactured by Tosoh Corporation
Mobile phase: THF (manufactured by FUJIFILM Wako Pure Chemical Corporation, stabilizer-free, liquid chromatography grade)
Columns: Two TSKgel Super Multipore HZ-M columns manufactured by TOSOH CORPORATION were connected in series.
Sample concentration: 5 mg/mL
Mobile phase flow rate: 0.35 mL/min
Measurement temperature: 40°C
Standard sample for calibration curve: PStQuick MP-M manufactured by TOSOH CORPORATION

### [Kinematic viscosity at 100°C]

Using a fully automatic viscometer CAV-4 manufactured by Canon Inc., the kinematic viscosity was measured according to JIS K 2283.

### [Ethylene content]

The ethylene content was measured using an ECP500 nuclear magnetic resonance apparatus manufactured by JEOL Ltd. In the measurement, a mixture of o-dichlorobenzene/deuterated benzene (80/20 vol%) was used as a solvent, the sample concentration was 55 mg/0.6 mL, the measurement temperature was 120°C, the observation nucleus was ¹³C (125 MHz), the sequence was a single-pulse proton-decoupled sequence, the pulse width was 4.7 µsec (45° pulse), the repetition time was 5.5 seconds, the number of scans was 10,000 or more, and the chemical shift threshold was 27.50 ppm. The ethylene content was determined from a ¹³C-NMR spectrum measured according to reports from "Kobunshi Bunseki Handbook (Polymer Analysis Handbook)" (published from Asakura Publishing Co., Ltd., pp. 163-170), G. J. Ray (Macromolecules, 10, 773 (1977)), J. C. Randall (Macromolecules, 15, 353 (1982)), and K. Kimura et al. (Polymer, 25, 4418 (1984)).

### [Melting point (Tm)]

The melting point (Tm) was measured using X-DSC-7000 manufactured by Seiko Instruments Inc. Approximately 8 mg of a sample was added into an easily sealable aluminum pan, and the pan was arranged in a DSC cell. The DSC cell was placed in a nitrogen atmosphere, and the temperature was raised from room temperature to 150°C at 10°C/min, then held at 150°C for 5 minutes, and then lowered at 10°C/min to cool the DSC cell to -100°C (cooling process). Then, after holding at -100°C for 5 minutes, the temperature was raised to 150°C at a rate of 10°C/min, and the temperature at which the enthalpy curve obtained during the warming process shows the maximum value was taken as the melting point, and the sum of heat absorption accompanying melting was taken as the heat of fusion. When no peak was observed or the value of the heat of fusion was 1 J/g or less, the melting point (Tm) was considered not to be observed. The melting point and the heat of fusion were determined based on JIS K7121.

### [Evaluation of emulsion stability]

The appearance of the obtained aqueous lubricant composition stored at room temperature for 1 week was evaluated by visual inspection. Evaluation criteria are as below. When the aqueous dispersion is used as an aqueous lubricant for, for example, aluminum die-casting, the emulsion stability is preferably high from the viewpoint of quality stability.
O: Any of turbidity, deposition and precipitation did not occur.
X: One or more of turbidity, deposition and precipitation occurred.

### [Evaluation of tendency to fix to metal]

A state obtained by weighing out 20 g of the obtained aqueous lubricant composition onto a stainless (SUS304) dish, and conducting a heat resistance test at 250°C for 2 hours was evaluated by visual and tactile inspections. Evaluation criteria are as below. When the aqueous dispersion is used as an aqueous lubricant for, for example, aluminum die-casting, the amount of fixation to metal is preferably small because dimensional stability in molding is improved, and the frequency of cleaning of the lubricant fixed to the mold can be reduced.
O: Fixation to metal did not occur.
X: Fixation to metal did occurred.

### [Evaluation of residual ratio]

The residual ratio was calculated from a weight obtained by weighing out 20 g of the obtained aqueous lubricant composition onto a stainless (SUS304) dish, and conducting a heat resistance test at 250°C for 2 hours, followed by evaluation.

When the aqueous dispersion is used as an aqueous lubricant for, for example, aluminum die-casting, the residual ratio is preferably high because lubricity can be maintained, and fixation to the mold can be prevented. A residual ratio of less than 8.0% causes deficiency in lubricity and fixation to the mold. When the residual ratio is 8.0% or more, sufficient lubricity can be maintained, and fixation to the mold can be prevented.

The ethylene/α-olefin copolymers (B) used in Examples and Comparative Examples were obtained in Production Examples (production methods) below.

### [Production Example 1-1] Production of ethylene/α-olefin copolymer (A-1)

A stainless steel autoclave having an internal volume of 2 L and thoroughly purged with nitrogen was loaded with 760 mL of heptane and 120 g of propylene, the temperature of the system was raised to 150°C, and the total pressure was then set to 3 MPaG by supplying 0.85 MPa of hydrogen and 0.19 MPa of ethylene. Next, 0.4 mmol of triisobutylaluminum, 0.0002 mmol of [methylphenylmethylene(η⁵-cyclopentadienyl) (η⁵-2,7-di-tert-butylfluorenyl)]zirconium dichloride, and 0.002 mmol of N,N-dimethylanilinium tetrakis(pentafluorophenyl)borate were injected with nitrogen, and polymerization was initiated by stirring at a rotational speed of 400 rpm. Thereafter, only ethylene was continuously supplied to keep the total pressure at 3 MPaG, and the polymerization was carried out at 150°C for 5 minutes. The polymerization was terminated by addition of a small amount of ethanol into the system, and unreacted ethylene, propylene and hydrogen were then purged. The obtained polymerization solution was washed with 1,000 mL of 0.2 mol/L hydrochloric acid three times and then with 1,000 mL of distilled water three times, and dried over magnesium sulfate, and the solvent was distilled away under reduced pressure to obtain a crude ethylene/propylene copolymer.

A stainless steel autoclave having an internal volume of 1 L was loaded with 100 mL of a hexane solution of a Pd/alumina catalyst at 0.5% by mass and 500 mL of a hexane solution of the obtained crude ethylene/α-olefin copolymer at 30% by mass, and the autoclave was tightly closed, and then purged with nitrogen. Subsequently, the temperature was raised to 140°C with stirring, the inside of the system was purged with hydrogen, the pressure was then increased to 1.5 MPa with hydrogen, and hydrogenation reaction was carried out for 15 minutes. The reaction liquid was subjected to filtration to separate a hydrogenation catalyst, thereafter the solvent was distilled off under reduced pressure, and the residue was dried at 80°C under reduced pressure for 24 hours to obtain an ethylene/α-olefin copolymer (A-1) which is an ethylene/propylene copolymer.

The obtained ethylene/α-olefin copolymer (A-1) had a weight-average molecular weight (Mw) of 5,100, a molecular weight distribution (Mw/Mn) of 1.7, a kinematic viscosity of 150 mm²/s at 100°C, and an ethylene content of 48 mol%, with no melting point (Tm) observed.

### [Production Example 1-2] Production of ethylene/α-olefin copolymer (A-2)

A stainless steel autoclave having an internal volume of 2 L and thoroughly purged with nitrogen was loaded with 760 mL of heptane and 120 g of propylene, the temperature of the system was raised to 150°C, and the total pressure was then set to 3 MPaG by supplying 0.85 MPa of hydrogen and 0.19 MPa of ethylene. Next, 0.4 mmol of triisobutylaluminum, 0.0002 mmol of [diphenylmethylene(η⁵-3-n-butylcyclopentadienyl) (η⁵-2,7-di-tert-butylfluorenyl)]zirconium dichloride, and 0.002 mmol of N,N-dimethylanilinium tetrakis(pentafluorophenyl)borate were injected with nitrogen, and polymerization was initiated by stirring at a rotational speed of 400 rpm. Thereafter, only ethylene was continuously supplied to keep the total pressure at 3 MPaG, and the polymerization was carried out at 150°C for 5 minutes. The polymerization was terminated by addition of a small amount of ethanol into the system, and unreacted ethylene, propylene and hydrogen were then purged. The obtained polymerization solution was washed with 1,000 mL of 0.2 mol/L hydrochloric acid three times and then with 1,000 mL of distilled water three times, and dried over magnesium sulfate, and the solvent was distilled away under reduced pressure to obtain a crude ethylene/propylene copolymer.

A stainless steel autoclave having an internal volume of 1 L was loaded with 100 mL of a hexane solution of a Pd/alumina catalyst at 0.5% by mass and 500 mL of a hexane solution of the obtained crude ethylene/α-olefin copolymer at 30% by mass, and the autoclave was tightly closed, and then purged with nitrogen. Subsequently, the temperature was raised to 140°C with stirring, the inside of the system was purged with hydrogen, the pressure was then increased to 1.5 MPa with hydrogen, and hydrogenation reaction was carried out for 15 minutes. The reaction liquid was subjected to filtration to separate a hydrogenation catalyst, the solvent was then distilled away under reduced pressure, and the residue was dried at 80°C under reduced pressure for 24 hours to obtain an ethylene/α-olefin copolymer (A-2) which is an ethylene/propylene copolymer.

The obtained ethylene/α-olefin copolymer (A-2) had a weight-average molecular weight (Mw) of 4,800, a molecular weight distribution (Mw/Mn) of 1.7, a kinematic viscosity of 150 mm²/s at 100°C, and an ethylene content of 49 mol%, with no melting point (Tm) observed.

The graft-modified copolymers used in Examples and Comparative Examples were obtained in Production Examples (production methods) below.

### [Production Example 2-1] Production of graft-modified copolymer (X-1)

A 200-mL glass reactor with a stirrer, which is equipped with a nitrogen inlet pipe, a water-cooled condenser, a thermometer, and two dropping funnels, was charged with 100 g of the copolymer (A-1) obtained in Production Example 1-1, and a temperature inside the system was raised, nitrogen bubbling was then started at 120°C, and the inside of the system was maintained at 160°C. Thereafter, 6.6 g of maleic anhydride (warmed around 70°C in the liquid state) and 1.3 g of di-tert-butyl peroxide with which the two dripping funnels were charged in advance respectively were supplied over 5 hours. After completion of the supplying, the mixture was reacted over 1 hour. Next, the temperature was further raised to 175°C, and the inside of the system was depressurized, and then decompressed for 1 hour while nitrogen was gradually fed with a vacuum pump, thereby removing impurities (decomposed products of unreacted maleic anhydride and di-tert-butyl peroxide). A graft-modified copolymer (X-1) was obtained by the above operations.

The graft ratio of the obtained graft-modified copolymer (X-1) was 5% by mass. For the graft ratio, the oxygen content was quantified by elemental analysis, and from the value thus obtained, the succinic anhydride skeleton component was calculated. The weight-average molecular weight (Mw) was 7,200, the molecular weight distribution (Mw/Mn) was 1.8, the kinematic viscosity at 100°C was 400 mm²/s, and no melting point (Tm) was observed.

### [Production Example 2-2] Production of graft-modified copolymer (X-2)

A reaction was carried out and impurities were removed in the same manner as in Production Example 2-1 except that the copolymer (A-1) obtained in production Example 1-1 was changed to the copolymer (A-2) obtained in Production Example 1-2. A graft-modified copolymer (X-2) was obtained by the above operations.

The graft ratio of the obtained graft-modified copolymer (X-2) was 5% by mass. For the graft ratio, the oxygen content was quantified by elemental analysis, and from the value thus obtained, the succinic anhydride skeleton component was calculated. The weight-average molecular weight (Mw) was 7,000, the molecular weight distribution (Mw/Mn) was 1.8, the kinematic viscosity at 100°C was 390 mm²/s, and no melting point (Tm) was observed.

Details of the components used in Examples and Comparative Examples are as below.

### [Amine compound (Y)]

As an amine compound (Y-1), AMP-90 (manufactured by ANGUS Chemical Company, 2-amino-2-methyl-1-propanol, AMP-90 is the registered trademark of the company) was used.

As an amine compound (Y-2), 2-(2-aminoethoxy) ethanol (DGA) (manufactured by FUJIFILM Wako Pure Chemical Corporation) was used.

### [Comparative amine compound (y)]

As an amine compound (y-1), morpholine (manufactured by FUJIFILM Wako Pure Chemical Corporation) was used.

### [Silicone oil (Z)-containing emulsion]

As a silicone oil (Z)-containing emulsion (eZ-1), an alkyl aralkyl-modified silicone oil emulsion DOWS I^{™} SM 7001 Ex Emulsion (manufactured by Dow Toray Co., Ltd., non-volatile content: 54%) was used.

### [Surfactant]

As a surfactant (C-1), EMERGEN 1108 (manufactured by Kao Corporation, polyoxyethylene alkyl ether) was used.

### [Examples 1 to 6 and Comparative Examples 1 to 2 and 12]

One of the modified copolymers (X-1) to (X-2) or the copolymers (A-1) to (A-2) and the surfactant (C-1) were blended in amounts shown in Table 1, and the mixture was heated to 70°C with stirring at a stirring rate of 50 rpm. Next, a mixed solution of the amine compound (Y-1), (Y-2) or (y-1) and pure water was added, and the mixture was stirred for 30 minutes at a stirring rate of 150 rpm. Subsequently, hot water at 70°C was added, and the mixture was stirred for 60 minutes at a stirring rate of 250 rpm, and then allowed to cool for 30 minutes, thereby obtaining a water dispersion composition. The obtained water dispersion composition was stirred and mixed at room temperature for 30 minutes at a stirring rate of 250 rpm with an aqueous solution obtained by mixing the silicone oil (Z)-containing emulsion (eZ-1) and pure water at a ratio of 38 : 62, thereby obtaining an aqueous lubricant composition. For the obtained aqueous lubricant composition, the emulsion stability, the tendency to fix to metal, and the residual ratio were evaluated by the methods described above. Table 1 shows the mass ratios and the evaluation results for the obtained aqueous lubricant composition.

### [Comparative Example 3]

One of the modified copolymer (X-1) and the surfactant (C-1) were blended in amounts shown in Table 1, and the mixture was heated to 70°C with stirring at a stirring rate of 50 rpm. Next, hot water at 70°C was added, and the mixture was stirred for 60 minutes at a stirring rate of 250 rpm, and then allowed to cool for 30 minutes, thereby obtaining a water dispersion composition. The obtained water dispersion composition was stirred and mixed at room temperature for 30 minutes at a stirring rate of 250 rpm with an aqueous solution obtained by mixing the silicone oil (Z)-containing emulsion (eZ-1) and pure water at a ratio of 38 : 62, thereby obtaining an aqueous lubricant composition. Table 1 shows the mass ratios and the evaluation results for the obtained aqueous lubricant composition.

### [Comparative Examples 4 and 5]

One of the modified copolymer (X-1) was blended in amounts shown in Table 1, and the mixture was heated to 70°C with stirring at a stirring rate of 50 rpm. Next, a mixed solution of the amine compound (Y-1) or (Y-2) and pure water was added, and the mixture was stirred for 30 minutes at a stirring rate of 150 rpm. Subsequently, hot water at 70°C was added, and the mixture was stirred for 60 minutes at a stirring rate of 250 rpm, and then allowed to cool for 30 minutes, thereby obtaining a water dispersion composition. The obtained water dispersion composition was stirred and mixed at room temperature for 30 minutes at a stirring rate of 250 rpm with an aqueous solution obtained by mixing the silicone oil (Z)-containing emulsion (eZ-1) and pure water at a ratio of 38 : 62, thereby obtaining an aqueous lubricant composition. Table 1 shows the mass ratios and the evaluation results for the obtained aqueous lubricant composition.

### [Comparative Example 6]

The surfactant (C-1) was blended in an amount shown in Table 1, and the mixture was heated to 70°C with stirring at a stirring rate of 50 rpm. Next, hot water at 70°C was added, and the mixture was stirred for 60 minutes at a stirring rate of 250 rpm, and then allowed to cool for 30 minutes, thereby obtaining a water dispersion composition. The obtained water dispersion composition was stirred and mixed at room temperature for 30 minutes at a stirring rate of 250 rpm with an aqueous solution obtained by mixing the silicone oil (Z)-containing emulsion (eZ-1) and pure water at a ratio of 38 : 62, thereby obtaining an aqueous lubricant composition. Table 1 shows the mass ratios and the evaluation results for the obtained aqueous lubricant composition.

### [Comparative Examples 7 and 8]

The amine compound (Y-1) or (Y-2) and pure water were blended in amounts shown in Table 1, and the mixture was heated to 70°C with stirring at a stirring rate of 250 rpm, and then stirred for 60 minutes. Thereafter, the reaction product was allowed to cool for 30 minutes, thereby obtaining a water dispersion composition. The obtained water dispersion composition was stirred and mixed at room temperature for 30 minutes at a stirring rate of 250 rpm with an aqueous solution obtained by mixing the silicone oil (Z)-containing emulsion (eZ-1) and pure water at a ratio of 38 : 62, thereby obtaining an aqueous lubricant composition. Table 1 shows the mass ratios and the evaluation results for the obtained aqueous lubricant composition.

### [Comparative Examples 9 and 10]

The surfactant (C-1) was blended in an amount shown in Table 1, and the mixture was heated to 70°C with stirring at a stirring rate of 50 rpm. Next, a mixed solution of the amine compound (Y-1) or (Y-2) and pure water was added, and the mixture was stirred for 30 minutes at a stirring rate of 150 rpm. Subsequently, hot water at 70°C was added, and the mixture was stirred for 60 minutes at a stirring rate of 250 rpm, and then allowed to cool for 30 minutes, thereby obtaining a water dispersion composition. The obtained water dispersion composition was stirred and mixed at room temperature for 30 minutes at a stirring rate of 250 rpm with an aqueous solution obtained by mixing the silicone oil (Z)-containing emulsion (eZ-1) and pure water at a ratio of 38 : 62, thereby obtaining an aqueous lubricant composition. Table 1 shows the mass ratios and the evaluation results for the obtained aqueous lubricant composition.

### [Comparative Example 11]

The silicone oil (Z)-containing emulsion (eZ-1) and pure water were blended at a ratio of 38 : 62, and stirred and mixed at room temperature for 30 minutes at a stirring rate of 250 rpm to obtain an aqueous lubricant composition. Table 1 shows the mass ratios and the evaluation results for the obtained aqueous lubricant composition.

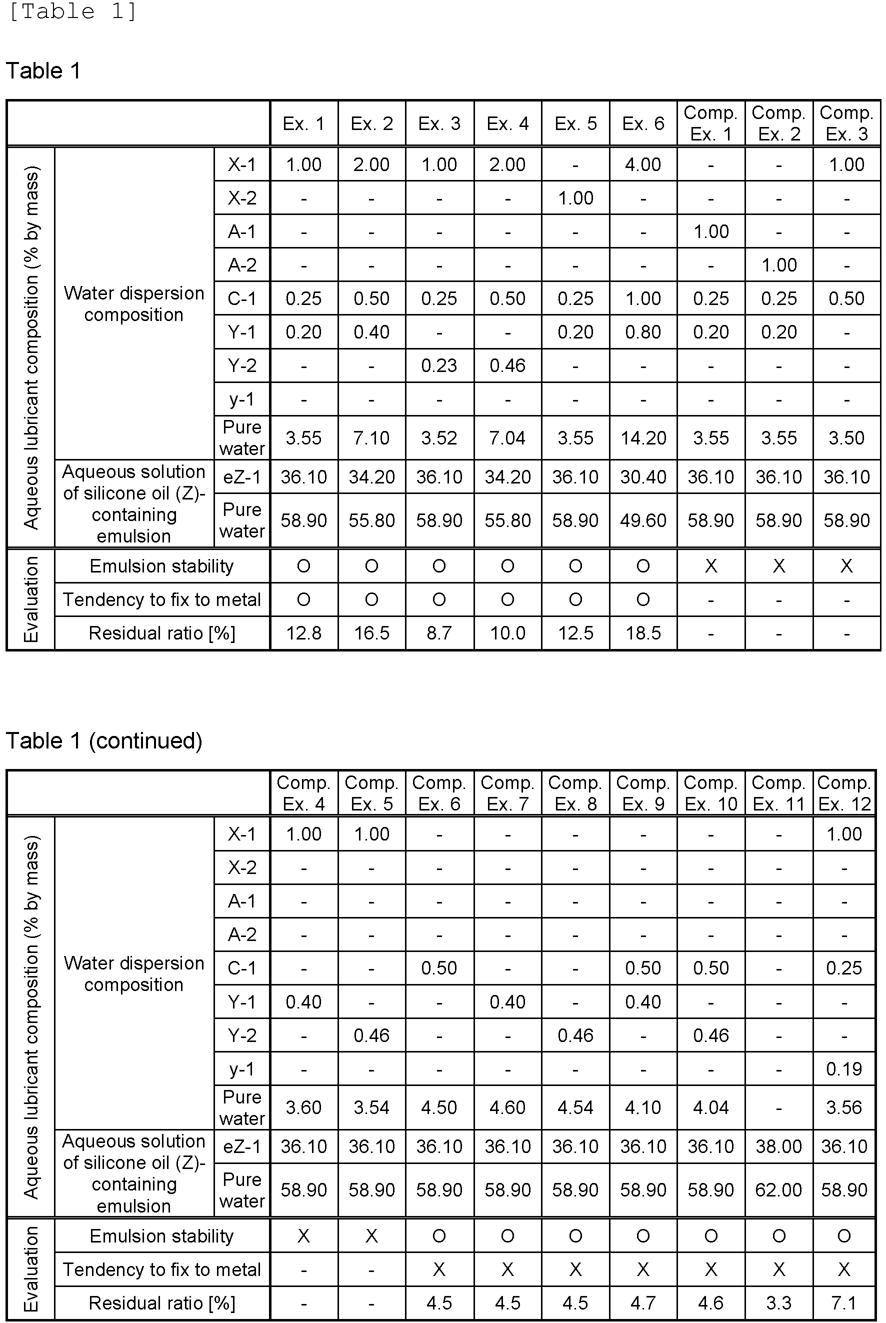

## Claims

1. An aqueous lubricant composition comprising:
a graft-modified ethylene/α-olefin copolymer (X) having a main chain part derived from an ethylene/α-olefin copolymer (A) that satisfies the following requirements (a-1) to (a-3), and a graft part derived from an unsaturated monomer (B) that satisfies the following requirement (b-1);
an amine compound (Y) that satisfies the following requirement (y-2);
at least one silicone oil (Z) selected from the group consisting of alkyl-modified silicone oil and alkyl aralkyl-modified silicone oil;
water; and
a surfactant:
(a-1) a content ratio of ethylene units is 30 to 70 mol%;
(a-2) a weight-average molecular weight determined by gel permeation chromatography is 1,500 to 30,000;
(a-3) no melting point is observed as measured in differential scanning calorimetry;
(b-1) the unsaturated monomer (B) is at least one unsaturated carboxylic acid-based monomer selected from the group consisting of an unsaturated carboxylic acid having 3 to 10 carbon atoms and a derivative thereof;
(y-2) one or more hydroxyl groups are present in the molecule.

2. The aqueous lubricant composition according to claim 1, wherein the ethylene/α-olefin copolymer (A) further satisfies the following requirements (a-4) and (a-5):
(a-4) a kinematic viscosity at 100°C is 10 to 5,000 mm²/s;
(a-5) a molecular weight distribution determined by gel permeation chromatography is 2.5 or less.

3. The aqueous lubricant composition according to claim 1, wherein the unsaturated monomer (B) is maleic anhydride.

4. The aqueous lubricant composition according to claim 1, wherein the graft-modified ethylene/α-olefin copolymer (X) satisfies the following requirements (x-1) to (x-5):
(x-1) a proportion of the graft part is 0.1% by mass or more and less than 70% by mass (the total amount of the main chain part and the graft part being 100% by mass);
(x-2) a weight-average molecular weight determined by gel permeation chromatography is 1,500 to 30,000;
(x-3) no melting point is observed as measured in differential scanning calorimetry;
(x-4) a kinematic viscosity at 100°C is 10 to 5,000 mm²/s;
(x-5) a molecular weight distribution determined by gel permeation chromatography is 2.5 or less.

5. The aqueous lubricant composition according to claim 1, wherein a content of the graft-modified ethylene/α-olefin copolymer (X) is 0.1 to 10% by mass relative to 100% by mass of the aqueous lubricant composition.

6. The aqueous lubricant composition according to claim 1, wherein the amine compound (Y) satisfies the following requirement (y-1):
(y-1) a molecular weight is 1,000 or less.

7. The aqueous lubricant composition according to claim 1, wherein a content of the amine compound (Y) is 10 to 60 parts by mass relative to 100 parts by mass of the graft-modified ethylene/α-olefin copolymer (X).

8. The aqueous lubricant composition according to claim 1, wherein a content of the silicone oil (Z) is 10 to 50% by mass relative to 100% by mass of the aqueous lubricant composition.

9. The aqueous lubricant composition according to claim 1, wherein the surfactant is a nonionic surfactant.
